(19)

Europäisches
Patentamt
European
Patent Office
Office européen
des brevets

(11) **EP 2 546 617 A1**

(12) **EUROPEAN PATENT APPLICATION**
published in accordance with Art. 153(4) EPC

(43) Date of publication:
**16.01.2013 Bulletin 2013/03**

(51) Int Cl.:
***G01F 1/74*** *(2006.01)*

(21) Application number: **11849470.7**

(22) Date of filing: **12.08.2011**

(86) International application number:
**PCT/JP2011/068449**

(87) International publication number:
**WO 2012/081279 (21.06.2012 Gazette 2012/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2010 JP 2010276733**

(71) Applicant: **Japan Oil, Gas and Metals National
Corporation
Minato-ku, Tokyo 105-0001 (JP)**

(72) Inventors:
• **SUDA, Tomoko
Chiba-shi
Chiba 261-0025 (JP)**

• **KAWAI, Michihiro
Kobe-shi
Hyogo 651-2225 (JP)**
• **IKEDA, Kenji
Kawasaki-shi
Kanagawa 210-0854 (JP)**

(74) Representative: **KATZAROV S.A.
European Patent Attorneys
19, rue des Epinettes
1227 Genève (CH)**

(54) **BATCH-TYPE MULTIPHASE FLOW MEASUREMENT DEVICE AND FLOW MEASUREMENT
METHOD**

(57)    A multiphase flow rate measurement device including a gas-liquid separator (100) that includes a con-
tainer (10) having a top section (11), a bottom section
(12) and a hollow body section (13), an inlet section (20)
that is provided in the body section (13), a liquid outlet
section (21) that is provided in the bottom section (12),
a gas outlet section (22) that is provided in the top section
(11) , an inner pipe (30) that is connected to the top sec-
tion (11), and a lower end of the inner pipe (30) being
open at a position lower than a lower end of the inlet
section (20), and a guide plate lower section (42) that is
provided on an outer side surface of the inner pipe (30),
a space (90) being formed in at least part of an area
between a guide plate lower section (42) and the body
section (13).

FIG.13

EP 2 546 617 A1

**Description**

TECHNICAL FIELD

The present invention relates to a batch-type multiphase flow rate measurement device and a flow rate measurement method.

BACKGROUND ART

Fluid removed from an oilfield contains crude oil, gas (e.g., methane, ethane, butane, and pentane), and water (e.g., salt water), and may also contain solid (e.g., sand). In order to efficiently transport crude oil via a tanker or a pipeline, it is indispensable to separate such a fluid into gas, water, and crude oil, and determine their flow rates.

In the petroleum industry, gas has been mainly separated by using a separation tank-type gas-liquid separator that utilizes the buoyancy of gas. Crude oil is slowly supplied to the separation tank-type gas-liquid separator. Since the separation tank-type gas-liquid separator is a large-capacity tank, there is a sufficient residence time during which the gas is separated from the liquid. Therefore, the separation tank-type gas-liquid separator has a large volume, is heavy, and requires a large installation area. These requirements can be met when the separation tank-type gas-liquid separator is used on shore. However, when the separation tank-type gas-liquid separator is used at an offshore platform which has a limited deck space, it is very important to reduce the dimensions and the weight of the separation tank-type gas-liquid separator. Moreover, the separation tank-type gas-liquid separator increases costs. Since the separation tank cannot be provided for each well from the viewpoint of cost and space, the separation tank is shared by a plurality of wells in order to measure the flow rate. Therefore, production rates from each well is measured only several times (days) a year on most of the offshore platforms.

It is important to determine production rates from each well as information for producing the maximum amount of oil from the oilfield. For example, when the amount of oil production has decreased, and the amount of water production has increased, the flow passage of water can be closed by closing the valve of the well to recover the amount of oil production before the flow passage of water is sufficiently formed. Therefore, a small and inexpensive multiphase flow rate measurement device that can be easily installed has been developed in order to determine production rates from each well or more frequently measure production rates from each well. A multiphase flow rate measurement device that does not separate fluid into oil, water, and gas, and a multiphase flow rate measurement device that separates fluid into oil, water, and gas have been known.

JP-A-2001-165741 (hereinafter referred to as "Patent Document 1") discloses a multiphase flowmeter that does not separate fluid into oil, water, and gas. The multiphase flowmeter disclosed in Patent Document 1 includes a mixer, two rotors that differ in blade angle, and a spring that connects the rotors, and measures the pressure loss from the front side of the mixer to the rear side of the rotor, the rotational speed of the rotor, the spring torque, and the temperature. The measured temperature is used to determine the oil density and the water density. The multiphase flowmeter homogenizes a multiphase flow consisting of oil, water, and gas by using the mixer, and the pressure loss, the rotational speed, and the spring torque are used to solve empirical formulas for the total volume flow rate, the liquid density, and the gas volume fraction (=gas volume flow rate/total volume flow rate). The flow rate measurement algorithm is designed to solve the empirical formulas by using the measured pressure loss, rotational speed, spring torque, and temperature to determine the total volume flow rate, the liquid density, and the gas volume flow rate ratio, and calculate the gas volume flow rate, the liquid volume flow rate, and the water cut (=water volume flow rate/liquid volume flow rate).

However, the empirical formula cannot be applied depending on the fluid composition. Moreover, the flow regime may change depending on the flow rate conditions for each phase (i.e., the empirical formula cannot be applied). Therefore, it is necessary to calibrate the empirical formula on the site environment. However, the site data used for calibration must allow an error of $\pm$10% for the gas volume flow rate and the liquid volume flow rate, and allow an error of at least $\pm$3% for the water cut. Therefore, the calibrated empirical formula necessarily includes an error. The measured value also has a mechanical error range, and an error may also occur due to adhesion of solid. The multiphase flowmeter disclosed in Patent Document 1 cannot specify an error in measured value and an error factor. When the empirical formula is not appropriate for the site environment, the water cut determined by solving the empirical formula may be 100% even if the actual water cut is 30%, for example. Therefore, it is very difficult to utilize the multiphase flowmeter disclosed in Patent Document 1 on the site environment.

*Handbook of Multiphase Flow Metering,* The Norwegian Society for Oil and Gas Measurement and The Norwegian Society of Chartered Technical and Scientific Professionals (hereinafter referred to as "Non-patent Document 1") discloses another multiphase flowmeter that does not separate fluid into oil, water, and gas. Since the multiphase flowmeter disclosed in Non-patent Document 1 also utilizes a measurement algorithm that uses an empirical formula, it is necessary to calibrate the empirical formula on site, and it is difficult to specify an error and an error factor in the same manner as the multiphase flowmeter disclosed in Patent Document 1.

United States Patent No. 5,526,684 (hereinafter referred to as "Patent Document 2") discloses a multiphase flowmeter that separates fluid into oil, water, and gas. The multiphase flowmeter disclosed in Patent Document 2 utilizes a simple cyclone gas-liquid separator that does not have an internal structure as disclosed in John S. Lievois, Multiphase Flow Measurement Class 8110, Colorado Experiment Engineering Station Inc. (hereinafter referred to as "Non-patent Document 2"). In the multiphase flowmeter disclosed in Patent Document 2, a gas flowmeter is provided in the gas outlet pipe of the gas-liquid separator to measure the gas flow rate, and a Coriolis meter is provided in the liquid outlet pipe of the gas-liquid separator to measure the flow rate of water and the flow rate of crude oil. Therefore, the measurement accuracy of the multiphase flowmeter depends on the separation performance of the gas-liquid separator. Patent Document 2 also discloses technology that combines two gas-liquid separation pipes on the downstream side of the gas-liquid separator in order to deal with a case where it is difficult to fully utilize the performance of the gas-liquid separator.

Watanabe T, Ikeda T, and Okatsu H, "Development of Multiphase Flow Measuring System" (Annual Report 2007, Japan Oil, Gas and Metals National Corporation, pp. 85-88) (hereinafter referred to as "Non-patent Document 3") discloses another multiphase flowmeter that separates fluid into oil, water, and gas. The multiphase flowmeter disclosed in Non-patent Document 3 confines the vertical upward flow by using upper and lower valves, measures the liquid surface and the oil-water interface by using differential pressure transmitters, and calculates the water cut. Non-patent Document 3 states that oil-water slippage does not occur when the apparent liquid superficial velocity (liquid flow rate/tube cross-sectional area) is 0.5m/s or more, and measurement can be performed when the error is $\pm 5\%$. However, when the gas volume fraction is large (e.g., 99% or more), it is necessary to use a sampling tube having a sufficient length for sampling the liquid since the amount of liquid is small. When measuring the flow rate of a multiphase flow having a periodic flow rate, typical water cut cannot be calculated without increasing the number of samplings.

Watanabe T, Ikeda K, Ichikawa M. Kawai M, Yamada M, and Fujiwara K, "Development of Multiphase Flow Measuring System" (Proceedings of Lectures at 2009 Spring Meeting, Japanese Association for Petroleum Technology, pp. 85-86) (hereinafter referred to as "Non-patent Document 4") discloses another multiphase flowmeter that separates fluid into oil, water, and gas as technology that solves the problem of the multiphase flowmeter disclosed in Non-patent Document 3. The multiphase flowmeter disclosed in Non-patent Document 4 includes four valves, a gas-liquid separator, a measurement pipe, a differential pressure transmitter that measures the liquid surface and the oil-water interface, a manometer, a thermometer, and a gas flowmeter. The multiphase flowmeter supplies a multiphase flow to the gas-liquid separator, separates the multiphase flow into gas and liquid, measures the gas volume flow rate by using the gas flowmeter, accumulates the liquid in the measurement pipe for a few minutes, measures the liquid surface and the oil-water interface by using the differential pressure transmitter, and calculates the liquid volume flow rate and the water cut (i.e., batch type). In this case, a liquid discharge operation is required after the measurement. The multiphase flowmeter disclosed in Patent Document 2 may suffer from a liquid volume flow rate measurement error due to bubbles that may be mixed into the liquid outlet pipe. Moreover, a measurement error in water cut may occur due to the difference between the oil velocity and the water velocity. The multiphase flowmeter disclosed in Non-patent Document 4 is configured so that bubbles are discharged to the gas outlet pipe. Moreover, it is unnecessary to take account of the difference between the oil velocity and the water velocity. Therefore, the measurement error factors of the multiphase flowmeter disclosed in Non-patent Document 4 include a measurement error due to liquid introduced into the gas outlet pipe, and errors of the instrument. Introduction of liquid into the gas outlet pipe can be determined by providing a droplet separator in the gas outlet pipe, and an error factor can be determined (reduced) by returning the gas to a measurement pipe.

Various gas-liquid separators have been proposed. The gas-liquid separator disclosed in Non-patent Document 2 exhibits excellent performance within a specific flow rate range. However, the separation efficiency deteriorates when the flow rate is outside the above range. This makes it impossible to prevent a situation in which liquid is incorporated in the separated gas, or gas is incorporated in the separated liquid. For example, the flow rate of gas-containing crude oil may change by a factor of five after the multiphase flow is produced from an oilfield. Therefore, there are considerable problems associated with the gas-liquid separator disclosed in Non-patent Document 2.

United States Patent No. 4,596,586 (hereinafter referred to as "Patent Document 3") discloses a structure that may solve the above problems of the gas-liquid separator disclosed in Non-patent Document 2. Specifically, an inner pipe is provided in a vertical pipe, the upper end of the inner pipe being connected to a gas outlet pipe, and the lower end of the inner pipe being open at a position slightly lower than the entrance of an inlet pipe. The inner pipe serves as a partition wall, and suppresses a phenomenon in which droplets are mixed into the separated gas from the gas-liquid multiphase flow.

The cyclone gas-liquid separator also functions as a mist separator. For example, JP-A-2001-246216 (hereinafter referred to as "Patent Document 4") discloses a gas-liquid separator that separates droplets dispersed in gas by utilizing a centrifugal force. The gas-liquid separator disclosed in Patent Document 4 includes an inner pipe and a baffle plate in the same manner as the gas-liquid separator disclosed in Patent Document 3. However, the inner pipe extends downward through the baffle plate, and is open downward. The baffle plate is connected to the lower area of the inner pipe to form a ring, and a circular space is formed between the baffle plate and the outer pipe. A mist-containing gas flows into the outer pipe through the inlet pipe attached to the sidewall of the outer pipe in the tangential direction, and moves downward while forming a vortex flow along the inner wall of the outer pipe. The mist is trapped by the inner wall of the outer pipe, flows downward along the inner wall of the outer pipe, and reaches the liquid outlet pipe. The gas moves downward through the circular space formed by the baffle plate around the inner wall of the outer pipe, then moves upward through the center inner pipe, and reaches the gas outlet pipe. A situation in which the mist-containing gas reaches the gas outlet pipe is prevented by the long inner pipe and the baffle plate that is provided in the lower area of the inner pipe and also extends to an area around the outer pipe. This increases the separation efficiency of the cyclone gas-liquid separator.

According to Non-patent Document 2 and Patent Documents 3 and 4, a vortex flow is produced by attaching the inlet pipe to the side of the outer pipe in the tangential direction. JP-A-2000-317212 (hereinafter referred to as "Patent Document 5") discloses a cyclone gas-liquid separator that produces a vortex flow based on a different principle. In the gas-liquid separator disclosed in Patent Document 5, the inlet pipe is connected to the outer pipe so that the inlet pipe extends toward the center axis of the outer pipe and is open toward the circular area formed by the outer pipe and the inner pipe. The circular area is closed by a plate-like guide around the opening, so that bubble-containing liquid is guided to an area opposite to the guide to form a vortex flow.

In the cyclone gas-liquid separator disclosed in United States Patent No. 4,187,088 (hereinafter referred to as "Patent Document 6"), there is not only the guide around the opening but also a guide that extends to the lower end of the opening of the gas-liquid multiphase flow inlet pipe. In the gas-liquid separator disclosed in Patent Document 6, the inlet pipe is connected to the outer pipe so that the inlet pipe extends toward the center axis of the outer pipe (i.e., a flow passage is formed). The front side, the upper side, the lower side, and the side opposite to the desired whirl direction are completely enclosed so that a gas-liquid multiphase flow that enters through the inlet pipe is guided in the whirl direction to form a vortex flow.

The pressure of a gas-liquid multiphase flow produced from an oilfield is very high, and changes. Therefore, a gas-liquid separator is designed to withstand a high pressure. When using a configuration in which the inlet pipe is connected to the side of the outer pipe in the tangential direction (e.g., the gas-liquid separators disclosed in Non-patent Document 2, Patent Document 3, and Patent Document 4), since the connection section is not symmetrical, an unbalanced load may be repeatedly applied to the weld when the pressure of the fluid changes, so that fatigue failure may occur. On the other hand, a configuration in which the inlet pipe is connected to the outer pipe so that the inlet pipe extends toward the center axis of the outer pipe (e.g., the gas-liquid separators disclosed in Patent Documents 5 and 6) is safe since the connection section is symmetrical.

The gas-liquid separator disclosed in Patent Document 4 is used for gas in which droplets (mist) are dispersed, and the gas-liquid separator disclosed in Patent Document 5 is used for liquid in which bubbles are dispersed. Specifically, Patent Document 5 discloses a gas-liquid separator that separates excess ozone contained in ozone water by using a cyclone method. When the cyclone gas-liquid separator is modified in this manner, it can be used for a gas-liquid multiphase flow that differs in gas-liquid ratio.

SUMMARY OF INVENTION

TECHNICAL PROBLEM

As described above, a multiphase flowmeter that does not separate fluid into oil, water, and gas makes on-site calibration and specification of an error factor difficult. On the other hand, a multiphase flowmeter that separates fluid into oil, water, and gas suffers from introduction of droplets into the gas outlet pipe of the gas-liquid separator, and introduction of bubbles into the liquid outlet pipe.

The gas-liquid separators and the multiphase flow rate measurement devices disclosed in Non-patent Document 2 and Patent Documents 2 to 4 are inferior to the gas-liquid separators disclosed in Patent Documents 5 and 6 from the viewpoint of safety at high pressure. The gas-liquid separator disclosed in Patent Document 5 cannot apply a sufficient centrifugal force for separating a gas-liquid multiphase flow produced from an oilfield into gas and liquid. The gas-liquid separator disclosed in Patent Document 6 has a complex structure, and the pressure loss by a gas-liquid multiphase flow increases.

The invention was conceived in view of the above situation. Several aspects of the invention may provide a flow rate measurement device that has a simple configuration and a small number of error factors, and a flow rate measurement method.

SOLUTION TO PROBLEM

(1) According to one embodiment of the invention, there is provided a batch-type multiphase flow rate measurement device including:

a gas-liquid separator that includes a container having a top section, a bottom section, and a hollow body section that connects the top section and the bottom section, an inlet section that supplies a gas-liquid multiphase flow to the container via a side surface of the body section, a liquid outlet section that discharges liquid via the bottom section, a gas outlet section that discharges gas via the top section, an inner pipe that is hollow, an upper end of the inner pipe being connected to the top section, and a lower end of the inner pipe being open at a position lower than a lower end of the inlet section, and a guide plate that is provided on at least one of an outer side surface of the inner pipe and an inner side surface of the body section;

a main pipe that includes a gas-liquid multiphase flow inlet section to which the gas-liquid multiphase flow is supplied, a gas-liquid multiphase flow outlet section from which a gas-liquid multiphase flow is discharged, a branch section, and a confluence section, the branch section and the confluence section being provided between the gas-liquid multiphase flow inlet section and the gas-liquid multiphase flow outlet section;

an inlet pipe that connects the branch section and the inlet section, and extends toward a center axis of the body section via the inlet section when viewed from above;

a liquid outlet pipe that connects the confluence section and the liquid outlet section;

a gas outlet pipe that connects the confluence section and the gas outlet section;

flow passage switch means that switches a flow passage of the gas-liquid multiphase flow between a first path that dose not pass through the gas-liquid separator and a second path that passes through the gas-liquid separator;

first opening/closing means that is provided in the liquid outlet pipe, and opens or closes a path from the liquid outlet section to the confluence section;

second opening/closing means that is provided in the gas outlet pipe, and opens or closes a path from the gas outlet section to the confluence section;

a pressure measurement section that measures pressure at two or more measurement points that differ in height in at least one of the gas-liquid separator and the liquid outlet pipe; and

a gas flowmeter that is provided in the gas outlet pipe, and measures a flow rate, temperature, and pressure of gas discharged via the gas outlet section,

the inner side surface of the body section and the outer side surface of the inner pipe being concentric when viewed from above,

the guide plate including a guide plate side section that extends in a non-horizontal direction, and a guide plate lower section that extends in a non-vertical direction and is continuous with the guide plate side section,

the guide plate side section being at least disposed on the inner side surface of the body section at a position on one side of the inlet section, or on the outer side surface of the inner pipe at a position on one side of an area opposite to the inlet section,

the guide plate lower section being at least disposed on the outer side surface of the inner pipe at a position directly under an area opposite to the inlet section along part of the outer side surface of the inner pipe when viewed from above, and

a space being formed in at least part of an area between the guide plate lower section and the body section.

Since the space is formed in at least part of an area between the guide plate lower section and the body section, it is possible to implement a gas-liquid separator that can separate a gas-liquid multiphase flow that changes in flow rate and gas-liquid ratio to a large extent over time into gas and liquid with a high separation efficiency by using a simple configuration. This makes it possible to implement a multiphase flow rate measurement device that has a simple configuration and a small number of error factors.

(2) The batch-type multiphase flow rate measurement device may further include a controller section that controls the flow passage switch means, the first opening/closing means, and the second opening/closing means, and the controller section may perform a first process that causes the flow passage switch means to switch the flow passage of the gas-liquid multiphase flow from the first path to the second path, and causes the second opening/closing means to open the path from the gas outlet section to the confluence section, a second process that causes the flow passage switch means to switch the flow passage of the gas-liquid multiphase flow from the second path to the first path, and causes the second opening/closing means to close the path from the gas outlet section to the confluence section, a third process that causes the first opening/closing means to open the path from the liquid outlet section to the confluence section, and a fourth process that causes the first opening/closing means to close the path from the liquid outlet section to the confluence section.

This makes it possible to implement a multiphase flow rate measurement device that suppresses an error due to bubbles introduced (mixed) into the liquid outlet pipe.

(3) In the batch-type multiphase flow rate measurement device, the flow passage switch means may include third opening/closing means that is provided in the main pipe, and opens or closes a path from the branch section to the confluence section, and fourth opening/closing means that is provided in the inlet pipe, and opens or closes a path from the branch section to the inlet section.

(4) In the batch-type multiphase flow rate measurement device, the controller section may perform the first process that causes the fourth opening/closing means to open the path from the branch section to the inlet section, causes the second opening/closing means to open the path from the gas outlet section to the confluence section, and then causes the third opening/closing means to close the path from the branch section to the confluence section.

This makes it possible to more safely measure the flow rate.

(5) In the batch-type multiphase flow rate measurement device, the controller section may perform the second process that causes the third opening/closing means to open the path from the branch section to the confluence section, and then causes the fourth opening/closing means to close the path from the branch section to the inlet section.

This makes it possible to more safely measure the flow rate.

(6) The batch-type multiphase flow rate measurement device may further include a liquid flow rate calculation section that calculates a liquid flow rate, and the liquid flow rate calculation section may calculate the liquid flow rate based on pressures measured by the pressure measurement section at two or more measurement points that differ in height, and an elapsed time when the flow passage of the gas-liquid multiphase flow is the second path by the flow passage switch means.

(7) In the batch-type multiphase flow rate measurement device, the first opening/closing means may be provided at a position higher than the height of the confluence section.

This makes it possible to easily discharge liquid from the gas-liquid separator.

(8) The batch-type multiphase flow rate measurement device may further include a droplet separator that is provided in the gas outlet pipe, and separates droplets from gas that is discharged from the gas outlet section.

This makes it possible to easily determine the amount (state) of droplets introduced into the gas outlet pipe. This makes it possible to determine the liquid in gas per total liquid and the measurement accuracy.

(9) According to another embodiment of the invention, there is provided a batch-type multiphase flow rate measurement method using the above batch-type multiphase flow rate measurement device, the method including:

a first step that includes switching the flow passage of the gas-liquid multiphase flow from the first path to the second path by using the flow passage switch means, and opening the path from the gas outlet section to the confluence section by using the second opening/closing means; a second step that includes switching the flow passage of the gas-liquid multiphase flow from the second path to the first path by using the flow passage switch means, and closing the path from the gas outlet section to the confluence section by using the second opening/closing means; a third step that includes opening the path from the liquid outlet section to the confluence section by using the first opening/closing means; and a fourth step that includes closing the path from the liquid outlet section to the confluence section by using the first opening/closing means.

This makes it possible to implement a flow rate measurement method with a small number of error factors by using a multiphase flow rate measurement device having a simple configuration.

BRIEF DESCRIPTION OF DRAWINGS

FIG. 1 is an exemplary schematic view illustrating the meridian cross section of a gas-liquid separator 100.
FIG. 2 is an exemplary schematic cross-sectional view illustrating the gas-liquid separator 100 taken along the line A-A in FIG. 1.

FIG. 3 is a partial enlarged view illustrating an example of the configuration of an inner pipe 30 and a guide plate 40 when observing the center axis of a body section 13 from an inlet section 20 in the horizontal direction.

FIG. 4 is a perspective view illustrating an example of the inner pipe 30 and the guide plate 40 provided on the inner pipe 30 in FIG. 3.

FIG. 5 is a partial enlarged view illustrating an example of the configuration of an inner pipe 30 and a guide plate 40 when observing the center axis of a body section 13 from an inlet section 20 in the horizontal direction.

FIG. 6 is an exemplary schematic view illustrating the meridian cross section of a gas-liquid separator 100a according to a second configuration example.

FIG. 7 is an exemplary schematic cross-sectional view illustrating the gas-liquid separator 100a according to the second configuration example taken along the line A-A in FIG. 6.

FIG. 8 is an exemplary schematic view illustrating the meridian cross section of a gas-liquid separator 100b according to a third configuration example.

FIG. 9 is an exemplary schematic cross-sectional view illustrating the gas-liquid separator 100b according to the third configuration example taken along the line A-A in FIG. 8.

FIG. 10 is an exemplary schematic cross-sectional view illustrating a gas-liquid separator 100c according to a fourth configuration example taken along the line A-A in FIG. 8.

FIG. 11 is an exemplary schematic view illustrating the meridian cross section of a gas-liquid separator 100d according to a modification.

FIG. 12 is a graph illustrating the results for the liquid in gas per total liquid measured by using the gas-liquid separator 100 according to the first configuration example.

FIG. 13 is an exemplary schematic view illustrating the meridian cross section of a batch-type multiphase flow rate measurement device 1 according to a first embodiment.

FIG. 14 is a flowchart illustrating an example of the batch-type multiphase flow rate measurement method using the batch-type multiphase flow rate measurement device 1 according to the first embodiment.

FIG. 15 is a schematic view illustrating a liquid flow rate calculation example.

FIG. 16 is a graph illustrating an example of the relationship between the volume V and the height h.

FIG. 17 is an exemplary schematic view illustrating the meridian cross section of a batch-type multiphase flow rate measurement device 2 according to a second embodiment.

FIG. 18 is a schematic view illustrating a liquid flow rate calculation example.

FIG. 19 is an exemplary schematic view illustrating the meridian cross section of a batch-type multiphase flow rate measurement device 3 according to a third embodiment.

FIG. 20 is a schematic view illustrating an oil density/water density calculation example.

FIG. 21 is an exemplary schematic view illustrating the meridian cross section of a batch-type multiphase flow rate measurement device 4 according to a fourth embodiment.

FIG. 22 is a schematic view illustrating a liquid flow rate calculation example.

FIG. 23 is an exemplary schematic view illustrating the meridian cross section of a batch-type multiphase flow rate measurement device 5 according to a fifth embodiment.

FIG. 24 is an exemplary schematic view illustrating the meridian cross section of a batch-type multiphase flow rate measurement device 6 according to a sixth embodiment.

FIG. 25 is an exemplary schematic view illustrating an area around the flow passage switch means 130 of the meridian cross section of a batch-type multiphase flow rate measurement device 6 according to the sixth embodiment.

FIG. 26 is a schematic view illustrating a slug flow.

DESCRIPTION OF EMBODIMENTS

Exemplary embodiments of the invention are described in detail below with reference to the drawings. Note that the following embodiments do not unduly limit the scope of the invention as stated in the claims. Note also that all of the elements described below should not necessarily be taken as essential elements of the invention.

1. Configuration of gas-liquid separator

A batch-type multiphase flow rate measurement device according to one embodiment of the invention includes a gas-liquid separator. The configuration examples of the gas-liquid separator used for the batch-type multiphase flow rate measurement device are described below.

1-1. First configuration example

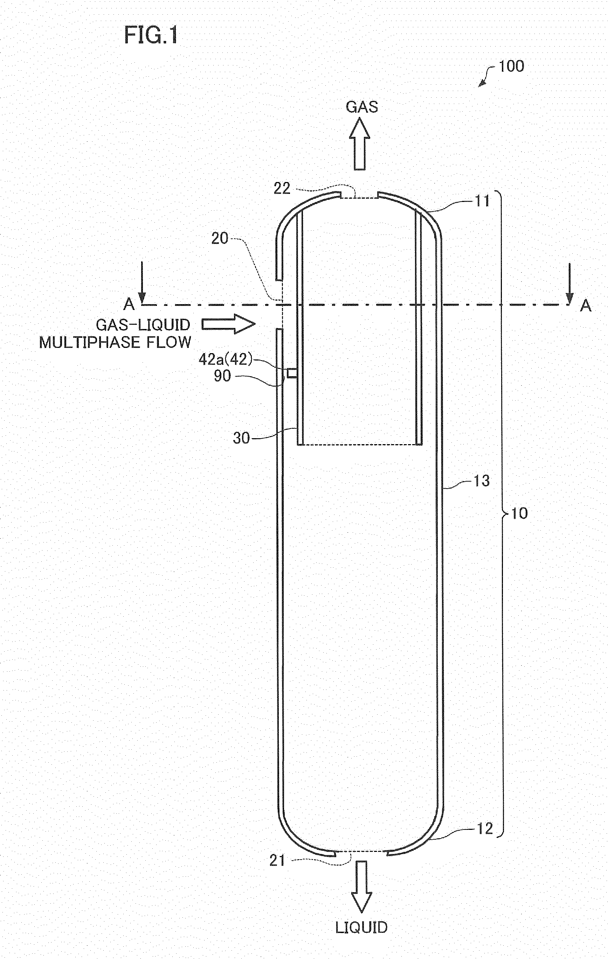

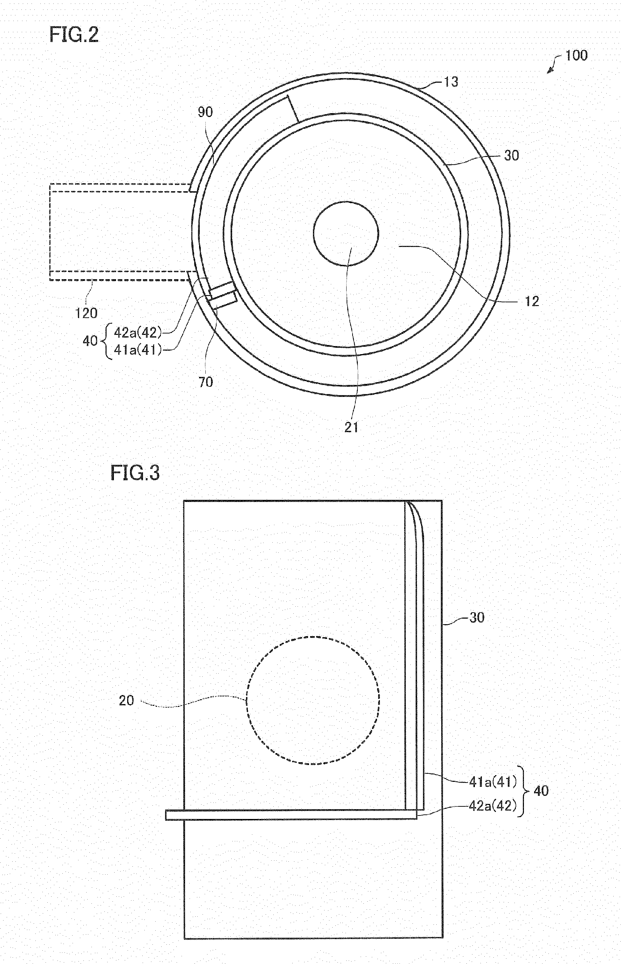

FIG. 1 is an exemplary schematic view illustrating the meridian cross section of a gas-liquid separator 100 according to a first configuration example. FIG. 2 is an exemplary schematic cross-sectional view illustrating the gas-liquid separator 100 according to the first configuration example taken along the line A-A in FIG. 1.

The gas-liquid separator 100 according to the first configuration example separates a gas-liquid multiphase flow into gas and liquid, and includes a container 10 that includes a top section 11, a bottom section 12, and a hollow body section 13 that connects the top section 11 and the bottom section 12, an inlet section 20 that supplies a gas-liquid multiphase flow to the container 10 via the side surface of the body section 13, a liquid outlet section 21 that discharges liquid via the bottom section 12, a gas outlet section 22 that discharges gas via the top section 11, a hollow inner pipe 30, the upper end of the inner pipe 30 being connected to the top section 11, and the lower end of the inner pipe 30 being open at a position lower than the lower end of the inlet section 20, and a guide plate 40 that is provided on the outer side surface of the inner pipe 30. The inner side surface of the body section 13 and the outer side surface of the inner pipe 30 are concentric when viewed from above. The guide plate 40 includes a guide plate side section 41 that extends in a non-horizontal direction, and a guide plate lower section 42 that extends in a non-vertical direction and is continuous with the guide plate side section 41. The guide plate side section 41 is at least disposed on the inner side surface of the body section 13 at a position on one side of the inlet section 20, or on the outer side surface of the inner pipe 30 at a position on one side of an area opposite to the inlet section 20, and the guide plate lower section 42 is at least disposed on the outer side surface of the inner pipe 30 at a position directly under an area opposite to the inlet section 20 along part of the outer side surface of the inner pipe 30 when viewed from above. A space 90 is formed in at least part of an area between the guide plate lower section 42 and the body section 13.

The container 10 includes the top section 11, the bottom section 12, and the hollow body section 13 that connects the top section 11 and the bottom section 12. In the example illustrated in FIG. 1, the container 10 is a hollow container that extends in the vertical direction. The horizontal cross-sectional shape of the inner side surface of the body section 13 is circular. In the example illustrated in FIG. 1, the body section 13 has an identical diameter from the top section 11 to the bottom section 12. The center axis of the body section 13 is parallel to the vertical direction. Note that the invention is not limited to the above configuration. For example, part of the body section 13 may have a different inner diameter.

The inlet section 20 is provided in the body section 13 of the container 10 as an opening that communicates with the inner space of the container 10. The inlet section 20 functions as a flow passage that communicates with an inlet pipe 120, and supplies a gas-liquid multiphase flow to the container 10. In the example illustrated in FIG. 2, the inlet pipe 120 is provided so that the extension of a horizontal cross section along the centerline of the inlet pipe 120 in the supply direction of the gas-liquid multiphase flow intersects the center axis of the body section 13. It is preferable that the inlet pipe 120 be provided so that the centerline of the inlet pipe 120 intersects the center axis of the body section 13 when viewed from above taking account of the symmetry of the connection area between the body section 13 of the container 10 and the inlet pipe 120 in order to improve safety. In the example illustrated in FIGS. 1 and 2, the inlet section 20 has a circular shape.

The liquid outlet section 21 is provided in the bottom section 12 of the container 10 as an opening that communicates with the inner space of the container 10. The liquid outlet section 21 functions as a flow passage that communicates with a liquid outlet pipe 121, and discharges liquid separated by the gas-liquid separator 100 from the container 10. In the example illustrated in FIG. 1, the liquid outlet section 21 is provided at the center of the bottom section 12. Note that the invention is not limited to the above configuration. For example, the liquid outlet section 21 may be provided at a position offset from the center of the bottom section 12. In the example illustrated in FIGS. 1 and 2, the liquid outlet section 21 has a circular shape.

The gas outlet section 22 is provided in the top section 11 of the container 10 as an opening that communicates with the inner space of the container 10. The gas outlet section 22 functions as a flow passage that communicates with a gas outlet pipe 122, and discharges gas separated by the gas-liquid separator 100 from the container 10. In the example illustrated in FIG. 1, the gas outlet section 22 is provided at the center of the top section 11. Note that the invention is not limited to the above configuration. For example, the gas outlet section 22 may be provided at a position offset from the center of the top section 11. In the example illustrated in FIGS. 1 and 2, the gas outlet section 22 has a circular shape.

The inner pipe 30 has a hollow tubular shape. The upper end of the inner pipe 30 is connected to the top section 11 of the container 10. In the example illustrated in FIG. 1, the upper end of the inner pipe 30 is seal-tightly connected to the top section 11 of the container 10. The lower end of the inner pipe 30 is open at a position lower than the lower end of the inlet section 20. The inner pipe 30 communicates with the gas outlet section 22.

The cross-sectional shape of the outer side surface of the inner pipe 30 is circular. As illustrated in FIG. 2, the inner side surface of the body section 13 of the container 10 and the outer side surface of the inner pipe 30 are concentric when viewed from above. In the example illustrated in FIGS. 1 and 2, the horizontal cross-sectional shape of the inner side surface of the inner pipe 30 is circular, and the inner side surface of the inner pipe 30 has an identical diameter. Note that the invention is not limited to the above configuration. For example, part of the inner pipe 30 may have a different inner diameter and/or a different outer diameter.

In the example illustrated in FIGS. 1 and 2, the guide plate 40 is provided on the outer side surface of the inner pipe 30. As illustrated in FIG. 2, the guide plate 40 has a partial circular shape when viewed from above. It is preferable the guide plate 40 and the outer side surface of the inner pipe 30 be closely joined by welding or the like in order to ensure sufficient mounting strength and seal-tightness.

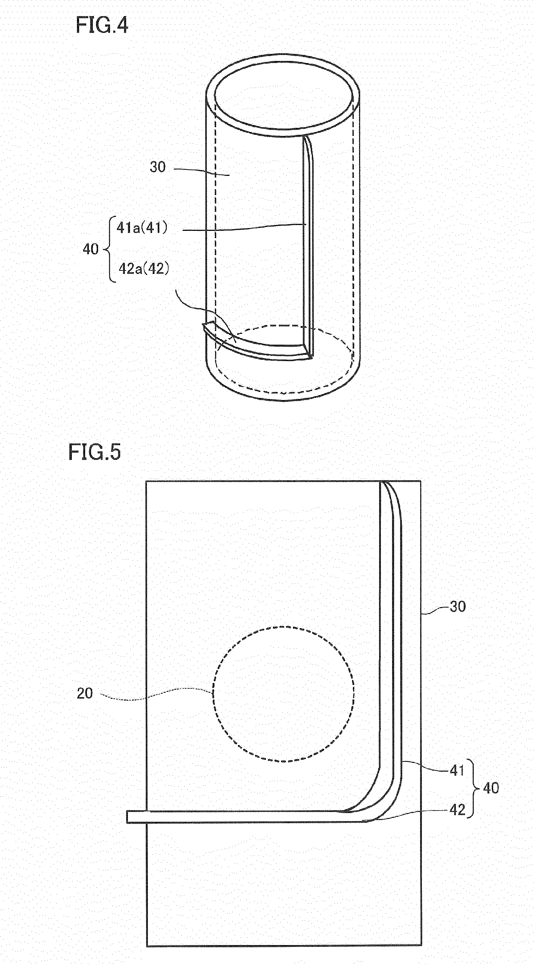

FIG. 3 is a partial enlarged view illustrating an example of the configuration of the inner pipe 30 and the guide plate 40 when observing the center axis of the body section 13 from the inlet section 20 in the horizontal direction. FIG. 4 is a perspective view illustrating an example of the inner pipe 30 and the guide plate 40 provided on the inner pipe 30 in FIG. 3.

As illustrated in FIGS. 2 and 3, the guide plate 40 includes the guide plate side section 41 that extends in a non-horizontal direction, and the guide plate lower section 42 that extends in a non-vertical direction and is continuous with the guide plate side section 41. The guide plate side section 41 is at least disposed on the outer side surface of the inner pipe 30 at a position on one side of an area opposite to the inlet section 20. The guide plate lower section 42 is at least disposed on the outer side surface of the inner pipe 30 at a position directly under an area opposite to the inlet section 20 along part of the outer side surface of the inner pipe 30 when viewed from above.

The guide plate 40 allows a gas-liquid multiphase flow supplied via the inlet section 20 to flow through the space between the inner side surface of the body section 13 of the container 10 and the outer side surface of the inner pipe 30 while whirling from one side to the other side of the inlet section 20 when observing the center axis of the body section 13 from the inlet section 20 in the horizontal direction. This makes it possible to separate the gas-liquid multiphase flow into gas and liquid by utilizing the centrifugal force.

It is preferable that the guide plate lower section 42 be provided on the outer side surface of the inner pipe 30 at least within a range from the position directly under the guide plate side section 41 to the position directly under an area of the outer side surface of the inner pipe 30 opposite to the inlet section 20 when observing the center axis of the body section 13 from the inlet section 20 in the horizontal direction, and provided within an angular range of 40 to 180 degrees around the center axis of the body section 13 when viewed from above. In the example illustrated in FIG. 2, the guide plate lower section 42 is provided to have a partial circular shape within an angular range of 90 degrees from the position directly under the guide plate side section 41 when viewed from above. If the guide plate lower section 42 is provided within an angular range of 40 degrees or more, a gas-liquid multiphase flow supplied via the inlet section 20 can be easily guided to the desired whirl direction. If the guide plate lower section 42 is provided within an angular range of 180 degrees or less, a situation in which a gas-liquid multiphase flow supplied via the inlet section 20 unnecessarily whirls can be prevented, so that a pressure loss can be suppressed.

It is preferable that the guide plate lower section 42 be positioned so that the distance between the guide plate lower section 42 and the lower end of the inlet section 20 is equal to or less than twice the vertical dimension of the inlet section 20. It is more preferable that the guide plate lower section 42 be positioned so that the distance between the guide plate lower section 42 and the lower end of the inlet section 20 is equal to or less than the vertical dimension of the inlet section 20. This prevents a situation in which a gas-liquid multiphase flow supplied via the inlet section 20 unnecessarily flows downward, so that a sufficient centrifugal force can be applied to the gas-liquid multiphase flow.

As illustrated in FIGS. 3 and 4, the guide plate 40 may include a first guide plate 41a that is provided on the outer side surface of the inner pipe 30, and forms the guide plate side section 41, and a second guide plate 42a that is provided on the outer side surface of the inner pipe 30, and forms the guide plate lower section 42. In the example illustrated in FIGS. 3 and 4, the first guide plate 41a and the second guide plate 42a adhere to the outer side surface of the inner pipe 30.

In the example illustrated in FIGS. 3 and 4, the first guide plate 41a is formed in the shape of a plate that extends in the vertical direction. The second guide plate 42a is formed in the shape of a plate that extends in the horizontal direction. The first guide plate 41a and the second guide plate 42a are provided to come in contact with each other. It is preferable that the first guide plate 41a and the second guide plate 42a be joined by welding or the like so that leakage of a gas-liquid multiphase flow supplied via the inlet section 20 does not occur. Note that the invention is not limited to the above configuration. For example, the first guide plate 41a (guide plate side section 41) may be inclined with respect to the vertical direction, and the second guide plate 42a (guide plate lower section 42) may be inclined with respect to the horizontal direction. At least one of the first guide plate 41a (guide plate side section 41) and the second guide plate 42a (guide plate lower section 42) may be curved.

In the example illustrated in FIGS. 3 and 4, the upper side of the second guide plate 42a is horizontal (i.e., extends in the horizontal direction). Note that the invention is not limited to the above configuration. For example, the upper side of the second guide plate 42a (guide plate lower section 42) may be inclined downward to the inner side surface of the container 10, or may be inclined downward to the outer side surface of the inner pipe 30.

FIG. 5 is a partial enlarged view illustrating another example of the configuration of the inner pipe 30 and the guide plate 40 when observing the center axis of the body section 13 from the inlet section 20 in the horizontal direction. As illustrated in FIG. 5, the guide plate side section 41 and the guide plate lower section 42 of the guide plate 40 may be integrated when observing the center axis of the body section 13 from the inlet section 20 in the horizontal direction.

In the example illustrated in FIG. 5, the guide plate 40 is formed by a single plate, and adheres to the outer side surface of the inner pipe 30.

As illustrated in FIG. 3 or 5 and FIG. 2, the space 90 is formed in at least part of the area between the guide plate lower section 42 and the body section 13 of the container 10. In the example illustrated in FIGS. 2 and 3, the space 90 is formed between the guide plate lower section 42 (second guide plate 42a) and the body section 13 of the container 10.

The space 90 allows a high-density liquid to be separated from a gas-liquid multiphase flow supplied via the inlet section 20, and flow downward along the inner side surface of the container 10 before the gas-liquid multiphase flow reaches the lower end of the guide plate lower section 42. Specifically, the space 90 functions as a flow passage that allows liquid separated from a gas-liquid multiphase flow to quickly flow downward inside the container 10. This makes it possible to enlarge the flow passage for gas separated from a gas-liquid multiphase flow, so that the gas-liquid multiphase flow can be separated into gas and liquid with a high separation efficiency even if there is an increase in the flow rate and the ratio of liquid. Moreover, a pressure loss can be suppressed by providing the space 90. Note that the space 90 may be provided at a plurality of positions.

The gas-liquid separator 100 according to the first configuration example can separate a gas-liquid multiphase flow that changes in flow rate and gas-liquid ratio to a large extent over time into gas and liquid with a high separation efficiency and with a simple configuration.

1-2. Second configuration example

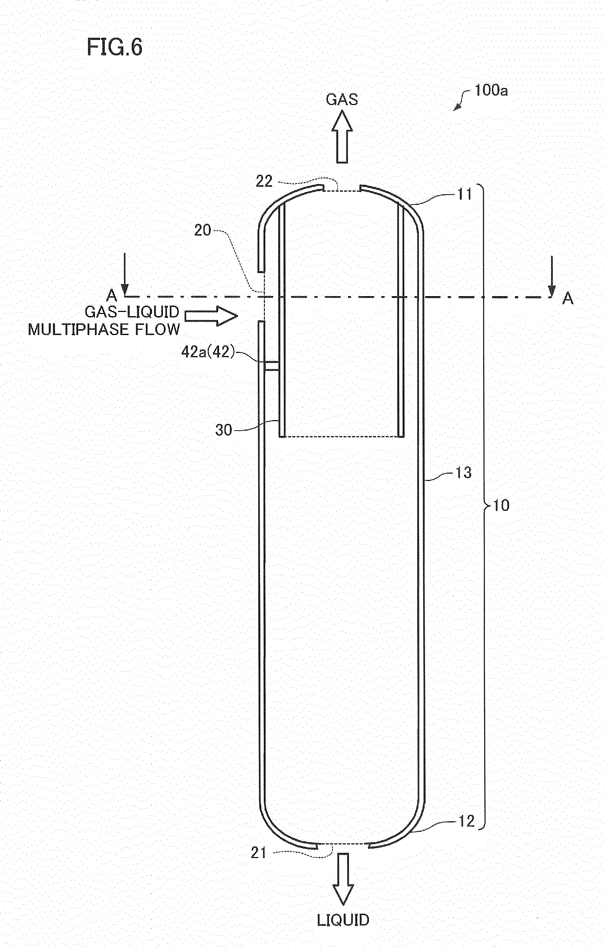

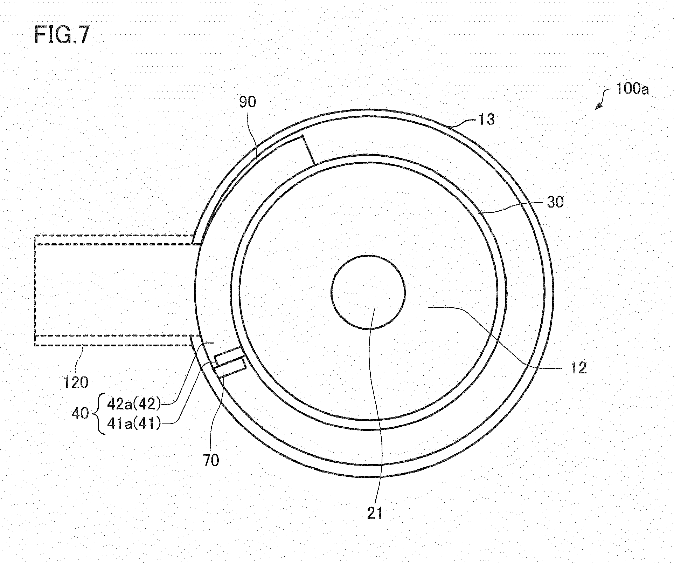

FIG. 6 is an exemplary schematic view illustrating the meridian cross section of a gas-liquid separator 100a according to a second configuration example, and FIG. 7 is an exemplary schematic cross-sectional view illustrating the gas-liquid separator 100a taken along the line A-A in FIG. 6.

The guide plate lower section 42 may be formed so that a space is not continuously formed between the guide plate lower section 42 and the inner side surface of the body section 13 at least in an area from a position directly under the guide plate side section 41 to a position directly under an area of the outer side surface of the inner pipe 30 opposite to the inlet section 20 when observing the center axis of the body section 13 from the inlet section 20 in the horizontal direction. Specifically, the guide plate 40 may continuously come in contact with the inner side surface of the body section 13 of the container 10 at least in an area directly under an area of the outer side surface of the inner pipe 30 opposite to the inlet section 20 when observing the center axis of the body section 13 from the inlet section 20 in the horizontal direction. In the example illustrated in FIGS. 6 and 7, a space is not continuously formed between the second guide plate 42a (guide plate lower section 42) and the inner side surface of the body section 13 in an area from a position directly under the guide plate side section 41 to a position directly under an area of the outer side surface of the inner pipe 30 opposite to the inlet section 20.

According to this configuration, a centrifugal force can be applied to fluid at a position around the inlet section 20, and liquid that has moved to the inner side surface of the container 10 due to a centrifugal force can be efficiently discharged through the space 90 at a position away from the inlet section 20.

As illustrated in FIG. 7, the gas-liquid separator 100a may be configured so that the width (dimension) of the space 90 increases as the distance from the end of the guide plate lower section 42 decreases.

According to this configuration, liquid that has moved to the inner side surface of the container 10 due to a centrifugal force can be efficiently discharged through the space 90.

1-3. Third configuration example

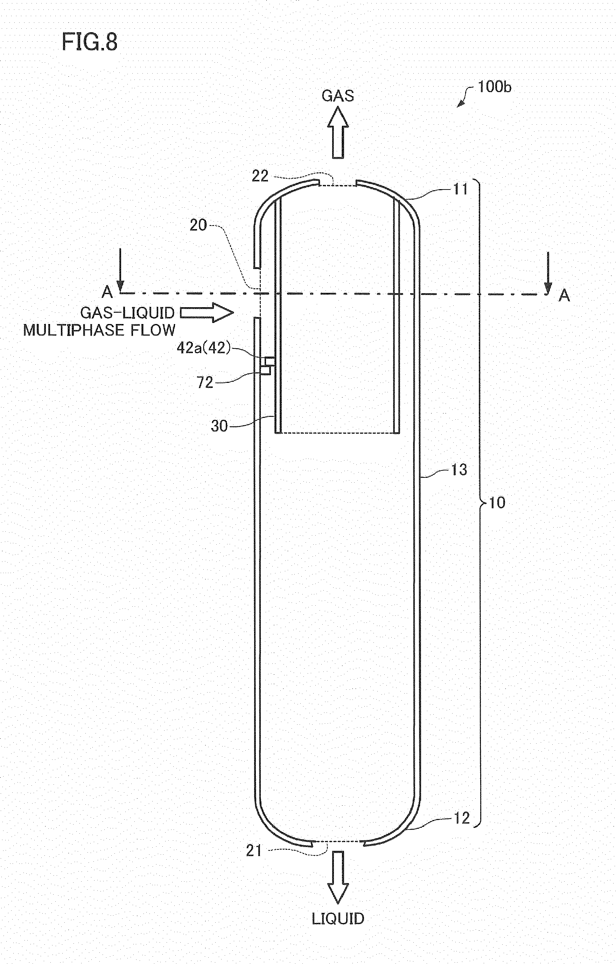

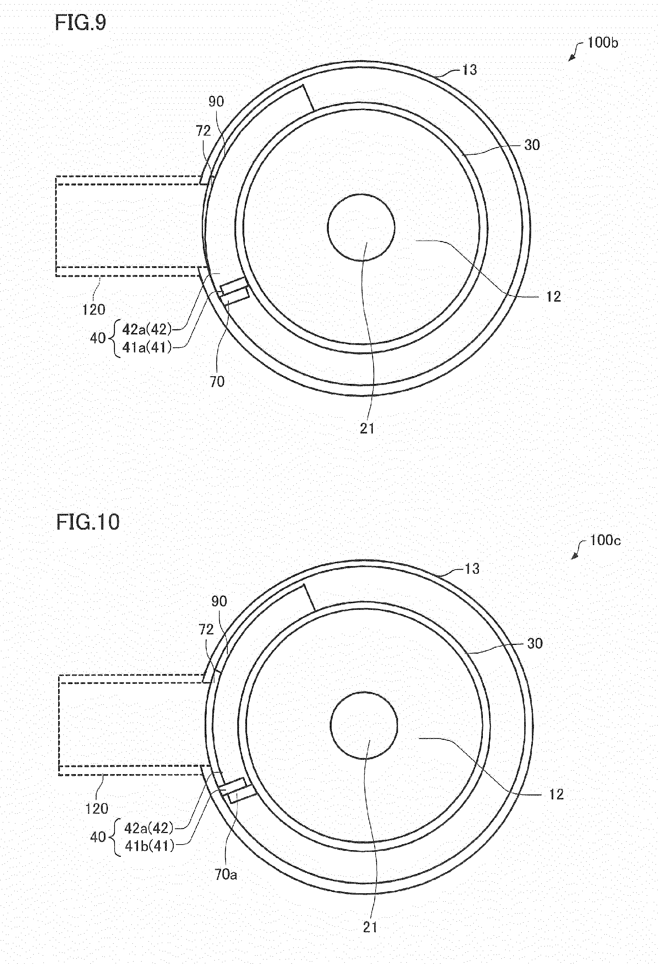

FIG. 8 is an exemplary schematic view illustrating the meridian cross section of a gas-liquid separator 100b according to a third configuration example, and FIG. 9 is an exemplary schematic cross-sectional view illustrating the gas-liquid separator 100b taken along the line A-A in FIG. 8.

As illustrated in FIGS. 8 and 9, the gas-liquid separator 100b may include a lower-area leakage prevention plate 72 that closes the space formed between the guide plate lower section 42 and the body section 13. The space formed between the body section 13 and the guide plate lower section 42 at least from a position directly under the guide plate side section 41 to a position directly under an area of the outer side surface of the inner pipe 30 opposite to the inlet section 20 may be closed by the lower-area leakage prevention plate 72 when observing the center axis of the body section 13 from the inlet section 20 in the horizontal direction. In the example illustrated in FIGS. 8 and 9, the lower-area leakage prevention plate 72 adheres to the inner side surface of the body section 13. The lower-area leakage prevention plate 72 may adhere to the guide plate lower section 42 (second guide plate 42a) in the area from the position directly under the guide plate side section 41 (first guide plate 41a) to an area directly under an area of the outer side surface of the inner pipe 30 opposite to the inlet section 20.

Since the second guide plate 42a is provided on the outer side surface of the inner pipe 30, a space is formed between the second guide plate 42a and the inner side surface of the body section 13 of the container 10 during production. Leakage of a gas-liquid multiphase flow through the space formed between the second guide plate 42a and the inner side surface of the body section 13 of the container 10 can be prevented by providing the lower-area leakage prevention plate 72 on the inner side surface of the body section 13. This makes it possible to effectively apply a centrifugal force to the gas-liquid multiphase flow.

As illustrated in FIG. 9, the gas-liquid separator 100b may be configured so that the width (dimension) of the space 90 increases as the distance from the end of the guide plate lower section 42 decreases.

According to this configuration, liquid that has moved to the inner side surface of the container 10 due to a centrifugal force can be efficiently discharged through the space 90.

1-4. Modifications of first configuration example, second configuration example, and third configuration example

As illustrated in FIG. 2 and FIG. 7 or 9, the gas-liquid separator 100 according to the first configuration example, the gas-liquid separator 100a according to the second configuration example, and the gas-liquid separator 100b according to the third configuration example may include a side-area leakage prevention plate 70 that closes the space formed between the guide plate side section 41 and the body section 13. In the example illustrated in FIGS. 2, 7, and 9, the side-area leakage prevention plate 70 adheres to the inner side surface of the body section 13. The side-area leakage prevention plate 70 may adhere to the guide plate side section 41.

In the example illustrated in FIGS. 2, 7, and 9, since the guide plate side section 41 (first guide plate 41a) is provided on the outer side surface of the inner pipe 30, a space is formed between the guide plate side section 41 (first guide plate 41a) and the inner side surface of the body section 13 of the container 10 during production. Leakage of a gas-liquid multiphase flow through the space formed between the guide plate side section 41 (first guide plate 41a) and the inner side surface of the body section 13 of the container 10 can be prevented by providing the side-area leakage prevention plate 70 on the inner side surface of the body section 13. This makes it possible to effectively apply a centrifugal force to the gas-liquid multiphase flow.

Note that the side-area leakage prevention plate 70 and the lower-area leakage prevention plate 72 may be integrally formed (i.e., may be formed by a single member). For example, the side-area leakage prevention plate 70 and the lower-area leakage prevention plate 72 may be formed by a single plate.

1-5. Fourth configuration example

FIG. 10 is an exemplary schematic cross-sectional view illustrating a gas-liquid separator 100c according to a fourth configuration example taken along the line A-A in FIG. 8. The meridian cross section of the gas-liquid separator 100c is the same as that in the example illustrated in FIG. 8.

As illustrated in FIGS. 8 and 10, the guide plate 40 may include a first guide plate 41b that is provided on the inner side surface of the body section 13, and forms the guide plate side section 41, and a second guide plate 42a that is provided on the outer side surface of the inner pipe 30, and forms the guide plate lower section 42. Specifically, the first guide plate 41b (guide plate side section 41) is at least disposed on the inner side surface of the body section 13 at a position on one side of the inlet section 20, and the second guide plate 42a (guide plate lower section 42) is at least disposed on the outer side surface of the inner pipe 30 at a position directly under an area opposite to the inlet section 20 along part of the outer side surface of the inner pipe 30 when viewed from above. In the example illustrated in FIGS. 8 and 10, the first guide plate 41b adheres to the inner side surface of the body section 13. The second guide plate 42a adheres to the outer side surface of the inner pipe 30.

In the example illustrated in FIGS. 8 and 10, the first guide plate 41b is formed in the shape of a plate that extends in the vertical direction. The second guide plate 42a is formed in the shape of a plate that extends in the horizontal direction. The first guide plate 41b and the second guide plate 42a are provided to come in contact with each other. Note that the invention is not limited to the above configuration. For example, the first guide plate 41b (guide plate side section 41) may be inclined with respect to the vertical direction, and the second guide plate 42a (guide plate lower section 42) may be inclined with respect to the horizontal direction. At least one of the first guide plate 41b (guide plate side section 41) and the second guide plate 42a (guide plate lower section 42) may be curved.

In the example illustrated in FIGS. 8 and 10, the upper side of the second guide plate 42a is horizontal (i.e., extends in the horizontal direction). Note that the invention is not limited to the above configuration. For example, the upper side of the second guide plate 42a (guide plate lower section 42) may be inclined downward to the inner side surface of the container 10, or may be inclined downward to the outer side surface of the inner pipe 30.

As illustrated in FIG. 10, the gas-liquid separator 100c may include a side-area leakage prevention plate 70a that closes the space formed between the guide plate side section 41 (first guide plate 41b) and the inner pipe 30. In the example illustrated in FIG. 10, the side-area leakage prevention plate 70a adheres to the outer side surface of the inner pipe 30. The side-area leakage prevention plate 70a may adhere to the guide plate side section 41 (first guide plate 41b).

In the example illustrated in FIG. 10, since the guide plate side section 41 (first guide plate 41b) is provided on the inner side surface of the body section 13, a space is formed between the guide plate side section 41 (first guide plate 41b) and the outer side surface of the inner pipe 30 during production. Leakage of a gas-liquid multiphase flow through the space formed between the guide plate side section 41 (first guide plate 41b) and the outer side surface of the inner pipe 30 can be prevented by providing the side-area leakage prevention plate 70a on the outer side surface of the inner pipe 30. This makes it possible to effectively apply a centrifugal force to the gas-liquid multiphase flow.

As illustrated in FIGS. 8 and 10, the gas-liquid separator 100c may include a lower-area leakage prevention plate 72 that closes the space formed between the guide plate lower section 42 and the body section 13. The space formed between the body section 13 and the guide plate lower section 42 at least from a position directly under the guide plate side section 41 to a position directly under an area of the outer side surface of the inner pipe 30 opposite to the inlet section 20 may be closed by the lower-area leakage prevention plate 72 when observing the center axis of the body section 13 from the inlet section 20 in the horizontal direction. In the example illustrated in FIGS. 8 and 10, the lower-area leakage prevention plate 72 adheres to the inner side surface of the body section 13. The lower-area leakage prevention plate 72 may adhere to the guide plate lower section 42 (second guide plate 42a) in the area from the position directly under the guide plate side section 41 (first guide plate 41b) to an area directly under an area of the outer side surface of the inner pipe 30 opposite to the inlet section 20.

Since the second guide plate 42a is provided on the outer side surface of the inner pipe 30, a space is formed between the second guide plate 42a and the inner side surface of the body section 13 of the container 10 during production. Leakage of a gas-liquid multiphase flow through the space formed between the second guide plate 42a and the inner side surface of the body section 13 of the container 10 can be prevented by providing the lower-area leakage prevention plate 72 on the inner side surface of the body section 13. This makes it possible to effectively apply a centrifugal force to the gas-liquid multiphase flow.

1-6. Fifth configuration example

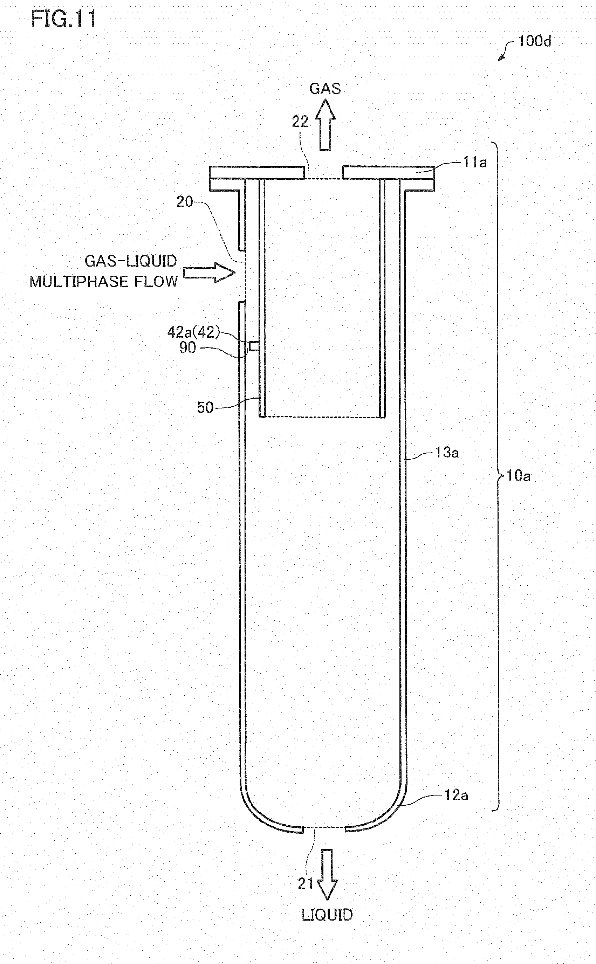

FIG. 11 is an exemplary schematic view illustrating the meridian cross section of a gas-liquid separator 100d according to a modification. A container 10a of the gas-liquid separator 100d illustrated in FIG. 11 includes a lid section that includes a top section 11a, and a container main body that includes a bottom section 12a and a body section 13a. The lid section and the container main body are connected by a flange coupling. The gas-liquid separator 100d is configured in the same manner as the gas-liquid separator 1 illustrated in FIG. 1 except for the above feature.

The gas-liquid separator 100 illustrated in FIG. 11 has the same effects as those of the gas-liquid separator 1 for the above reasons.

1-7. Experimental examples

In the following experimental examples, gas-liquid separation was implemented by using the gas-liquid separator 100 according to the first configuration example.

The gas-liquid separator 100 used for the experiments had a configuration in which the diameter of the inner side surface of the body section 13 was 200 mm, the diameter of the outer side surface of the inner pipe 30 was about 165 mm, the distance between the inner side surface of the body section 13 and the outer side surface of the inner pipe 30 was about 17 mm, and the diameter of the inlet section 20 was 50 mm. The guide plate lower section 42 was provided on the outer side surface of the inner pipe 30 within an angular range of 90 degrees from the position directly under the guide plate side section 41 when viewed from above. The width of the space 90 formed between the guide plate lower section 42 and the inner side surface of the body section 13 was about 5 mm.

The experiments were performed as follows. Specifically, the liquid outlet section 21 was closed. A water-nitrogen two-phase fluid prepared by mixing water and nitrogen gas at predetermined flow rates was supplied via the inlet section 20. A volume Vl of liquid supplied within a time t for which the liquid surface increased to a predetermined position below the lower end of the inner pipe 30 inside the container 10, and a volume S of liquid discharged via the gas outlet section 22 and separated (captured) by the droplet separator within the time t were measured. The above operation was repeated while changing the flow rate of water and the flow rate of nitrogen gas to measure the volume Vl and the volume S.

The flow rate Vn of nitrogen gas used for the water-nitrogen two-phase fluid was changed within the range of "0 $m^3$/h<Vn<300 $m^3$/h". The flow rate Vh of water used for the water-nitrogen two-phase fluid was changed in four stages (i.e., 1 $m^3$/h, 5 $m^3$/h, 10 $m^3$/h, and 15 $m^3$/h).

The liquid in gas per total liquid was calculated by the following expression using the volume Vl and the volume S measured by the above operation.

$$\text{Liquid in gas per total liquid (\%)} = (\text{volume S} / (\text{volume S} + \text{volume Vl})) \times 100$$

Specifically, a low liquid in gas per total liquid indicates a high gas-liquid separation efficiency.

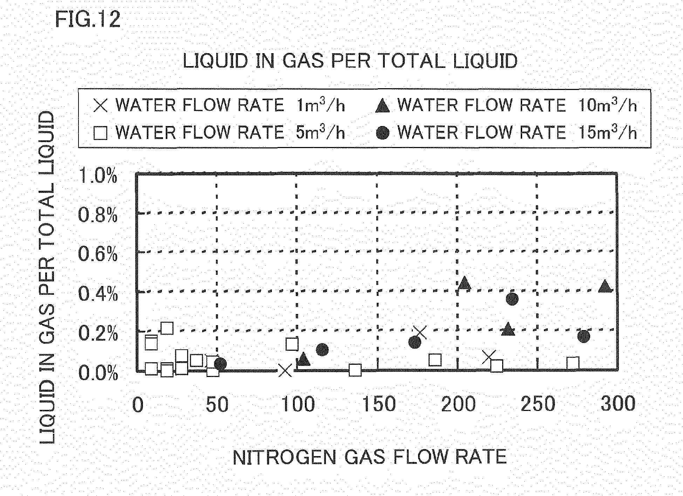

FIG. 12 is a graph illustrating the results for the liquid in gas per total liquid measured by using the gas-liquid separator 100 according to the first configuration example. The horizontal axis indicates the flow rate of nitrogen gas used for the water-nitrogen two-phase fluid, and the vertical axis indicates the liquid in gas per total liquid. A symbol that indicates the measurement point indicates the flow rate of water used for the water-nitrogen two-phase fluid.

As illustrated in FIG. 12, the liquid in gas per total liquid was 1% or less under the above measurement conditions.

The gas-liquid separator 100 according to the first configuration example thus can separate a gas-liquid multiphase flow into gas and liquid with a high separation efficiency and with a simple configuration over a wide flow rate range and a wide gas-liquid ratio range.

2. Batch-type multiphase flow rate measurement device

2-1. Batch-type multiphase flow rate measurement device according to first embodiment

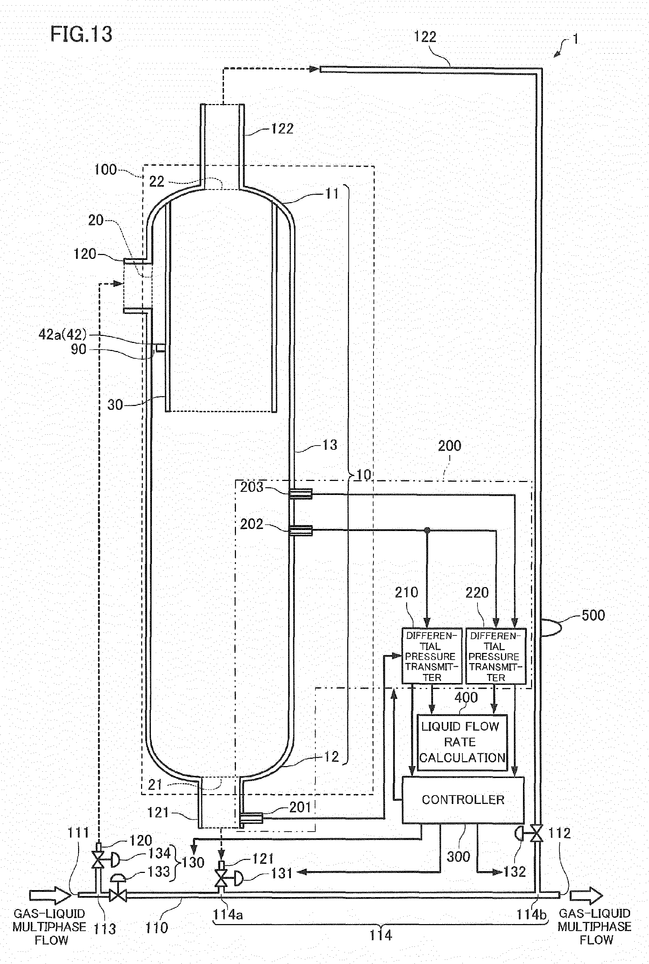

FIG. 13 is an exemplary schematic view illustrating the meridian cross section of a batch-type multiphase flow rate measurement device 1 according to a first embodiment. The batch-type multiphase flow rate measurement device 1 includes the gas-liquid separator 100 described in the section entitled "1-1. First configuration example". Note that the gas-liquid separator 100a, 100b, 100c, or 100d may be used instead of the gas-liquid separator 100.

The batch-type multiphase flow rate measurement device 1 includes a main pipe 110. The main pipe 110 includes a gas-liquid multiphase flow inlet section 111 to which a gas-liquid multiphase flow is supplied, a gas-liquid multiphase flow outlet section 112 from which a gas-liquid multiphase flow is discharged, a branch section 113, and a confluence section 114, the branch section 113 and the confluence section 114 being provided between the gas-liquid multiphase flow inlet section 111 and the gas-liquid multiphase flow outlet section 112. In the example illustrated in FIG. 13, the confluence section 114 includes a first confluence section 114a that is positioned relatively close to the gas-liquid multiphase flow inlet section 111, and a second confluence section 114b that is positioned relatively away from the gas-liquid multiphase flow inlet section 111. Note that the confluence section 114 may include a first confluence section 114a that is positioned relatively away from the gas-liquid multiphase flow inlet section 111, and a second confluence section 114b that is positioned relatively close to the gas-liquid multiphase flow inlet section 111.

The batch-type multiphase flow rate measurement device 1 includes an inlet pipe 120. The inlet pipe 120 connects the branch section 113 and the inlet section 20 of the gas-liquid separator 100. Specifically, the inlet pipe 120 communicates with the main pipe 110 via the branch section 113, and communicates with the inner space of the gas-liquid separator 100 via the inlet section 20. The inlet pipe 120 extends toward the center axis of the body section 13 of the gas-liquid separator 100 via the inlet section 20 when viewed from above.

The batch-type multiphase flow rate measurement device 1 includes a liquid outlet pipe 121. The liquid outlet pipe 121 connects the confluence section 114 and the liquid outlet section 21. Specifically, the liquid outlet pipe 121 communicates with the main pipe 110 via the confluence section 114, and communicates with the inner space of the gas-liquid separator 100 via the liquid outlet section 21. In the example illustrated in FIG. 13, the liquid outlet pipe 121 connects the first confluence section 114a and the liquid outlet section 21.

The batch-type multiphase flow rate measurement device 1 includes a gas outlet pipe 122. The gas outlet pipe 122 connects the confluence section 114 and the gas outlet section 22. Specifically, the gas outlet pipe 122 communicates with the main pipe 110 via the confluence section 114, and communicates with the inner space of the gas-liquid separator 100 via the gas outlet section 22. In the example illustrated in FIG. 13, the gas outlet pipe 122 connects the second confluence section 114b and the gas outlet section 22.

The batch-type multiphase flow rate measurement device 1 includes a flow passage switch means 130. The flow passage switch means 130 switches the flow passage of a gas-liquid multiphase flow between a first path that dose not pass through the gas-liquid separator 100 and a second path that passes through the gas-liquid separator 100. In the example illustrated in FIG. 13, the flow passage switch means 130 includes a third opening/closing means 133 that is provided in the main pipe 110, and opens or closes the path from the branch section 113 to the confluence section 114, and a fourth opening/closing means 134 that is provided in the inlet pipe 120, and opens or closes the path from the branch section 113 to the inlet section 20 of the gas-liquid separator 100. A known valve may be used as the third opening/closing means 133 and the fourth opening/closing means 134. Note that the flow passage switch means 130 may include a three-way valve that switches the flow passage between the first path and the second path.

The batch-type multiphase flow rate measurement device 1 includes a first opening/closing means 131. The first opening/closing means 131 is provided in the liquid outlet pipe 121, and opens or closes the path from the liquid outlet section 21 of the gas-liquid separator 100 to the confluence section 114. A known valve may be used as the first opening/closing means 131.

The first opening/closing means 131 may be provided at a position higher than the height of the confluence section 114. This makes it possible to easily discharge liquid from the gas-liquid separator 100. In the example illustrated in FIG. 13, the first opening/closing means 131 is provided at a position lower than the height of the gas-liquid separator 100 and higher than the height of the first confluence section 114a. It is preferable that the liquid outlet pipe 121 provided from the liquid outlet section 21 to the confluence section 114 (first confluence section 114a) be a linear pipe. This makes it possible to prevent a situation in which liquid remains in the liquid outlet pipe 121, so that the time required for discharging liquid from the gas-liquid separator 100 can be reduced.

The batch-type multiphase flow rate measurement device 1 includes a second opening/closing means 132. The second opening/closing means 132 is provided in the gas outlet pipe 122, and opens or closes the path from the gas outlet section 22 of the gas-liquid separator 100 to second confluence section 114b. A known valve may be used as the second opening/closing means 132.

The batch-type multiphase flow rate measurement device 1 includes a pressure measurement section 200. The pressure measurement section 200 measures pressure at two or more measurement points that differ in height in at least one of the gas-liquid separator 100 and the liquid outlet pipe 121 above the first opening/closing means 131. In the example illustrated in FIG. 13, the pressure measurement section 200 includes a pressure measurement connecting pipe 201 that is provided in the liquid outlet pipe 121, and used as a pressure measurement point, pressure measurement connecting pipes 202 and 203 that are provided in the body section 13 of the gas-liquid separator 100, and used as pressure measurement points, a differential pressure transmitter 210 that outputs a signal based on the difference between the pressure inside the connecting pipe 201 and the pressure inside the connecting pipe 202, and a differential pressure transmitter 220 that outputs a signal based on the difference between the pressure inside the connecting pipe 202 and the pressure inside the connecting pipe 203. In the example illustrated in FIG. 13, the connecting pipe 201 is provided at a position lower than the connecting pipe 202, and the connecting pipe 202 is provided at a position lower than the connecting pipe 203. It is preferable that the connecting pipe 201 be positioned close to the first opening/closing means 131 from the viewpoint of the liquid flow rate measurement accuracy (described later). It is preferable that the connecting pipe 203 be positioned below the lower end of the inner pipe 30 from the view point of the pressure measurement accuracy.

The batch-type multiphase flow rate measurement device 1 may include a controller section 300 that controls the flow passage switch means 130, the first opening/closing means 131, the second opening/closing means 132, and the pressure measurement section 200. The controller section 300 may be implemented by a dedicated circuit that performs each control process described later, or may be implemented by causing a central processing unit (CPU) (i.e., computer) to execute a control program stored in a storage means (not shown) or the like to perform each control process, for example. A control example of the controller section 300 is described later in the section entitled "2-2. Batch-type multiphase flow rate measurement method using batch-type multiphase flow rate measurement device according to first embodiment".

The batch-type multiphase flow rate measurement device 1 may include a liquid flow rate calculation section 400. The liquid flow rate calculation section 400 calculates the flow rate (liquid flow rate) of liquid included in a gas-liquid multiphase flow. The liquid flow rate calculation section 400 calculates the liquid flow rate based on pressures measured by the pressure measurement section 200 at two or more measurement points that differ in height, and the elapsed time when the flow passage of a gas-liquid multiphase flow is the second path by the flow passage switch means 130. A calculation example of the liquid flow rate calculation section 400 is described later in the section entitled "2-3. Liquid flow rate calculation example".

The batch-type multiphase flow rate measurement device 1 includes a gas flowmeter 500. The gas flowmeter 500 is provided in the gas outlet pipe 122, and measures the flow rate of gas discharged via the gas outlet section 22 of the gas-liquid separator 100. A volumetric flowmeter, a mass flowmeter, or the like may be used as the gas flowmeter 500. The gas flowmeter 500 includes a thermometer and a pressure gauge necessary for calculating the gas flow rate in a normal state, or includes functions of measuring the temperature and the pressure. The gas flowmeter 500 may be provided on the upstream side or the downstream side of the second opening/closing means 132. When the gas flowmeter 500 is provided on the upstream side of the second opening/closing means 132, the temperature T and the pressure P measured when the pressure measurement section 200 measures the pressure the liquid flow rate are desirably used to calculate the oil density, the water density, and the liquid density (described later). When the gas flowmeter 500 is provided on the downstream side of the second opening/closing means 132, the average temperature T and the average pressure P when gas stably flows immediately before the second opening/closing means 132 is in a closed state are desirably used to calculate the oil density, the water density, and the liquid density.

2-2. Batch-type multiphase flow rate measurement method using batch-type multiphase flow rate measurement device according to first embodiment

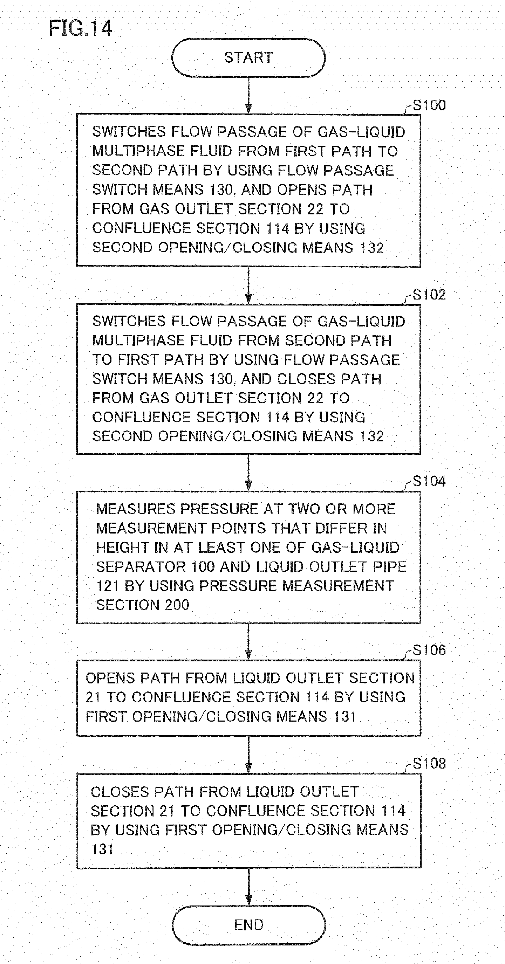

A batch-type multiphase flow rate measurement method using the batch-type multiphase flow rate measurement device 1 according to the first embodiment is described below. FIG. 14 is a flowchart illustrating an example of the batch-type multiphase flow rate measurement method using the batch-type multiphase flow rate measurement device 1 according to the first embodiment.

The batch-type multiphase flow rate measurement method illustrated in FIG. 14 includes a first step that includes switching the flow passage of a gas-liquid multiphase flow from the first path to the second path by using the flow passage switch means 130, and opening the path from the gas outlet section 22 to the confluence section 114 by using the second opening/closing means 132 (step S100), a second step that includes switching the flow passage of a gas-liquid multiphase flow from the second path to the first path by using the flow passage switch means 130, and closing the path from the gas outlet section 22 to the confluence section 114 by using the second opening/closing means 132 (step S102), a third step that includes measuring the pressure at two or more measurement points that differ in height in at least one of the gas-liquid separator 100 and the liquid outlet pipe 121 by using the pressure measurement section 200 (step S104), a fourth step that includes opening the path from the liquid outlet section 21 to the confluence section 114 by using the first opening/closing means 131 (step S106), and a fifth step that includes closing the path from the liquid outlet section 21 to the confluence section 114 by using the first opening/closing means 131 (step S 108).

An example in which the batch-type multiphase flow rate measurement method illustrated in FIG. 14 is mainly implemented under control of the controller section 300 is described below. Note that the batch-type multiphase flow rate measurement method illustrated in FIG. 14 may be implemented by a manual operation or the like.

In the first step (step S100), the controller section 300 performs a first process that causes the flow passage switch means 130 to switch the flow passage of a gas-liquid multiphase flow from the first path to the second path, and causes the second opening/closing means 132 to open the path from the gas outlet section 22 to the confluence section 114. For example, the controller section 300 may perform the first process that causes the fourth opening/closing means 134 to open the path from the branch section 113 to the inlet section 20 of the gas-liquid separator 100, causes the second opening/closing means 132 to open the path from the gas outlet section 22 to the confluence section 114, and then causes the third opening/closing means 133 to close the path from the branch section 113 to the confluence section 114. This makes it possible to prevent a situation in which the flow of a gas-liquid multiphase flow is blocked, so that the flow rate can be safely measured.

In the second step (step S102), the controller section 300 performs a second process that causes the flow passage switch means 130 to switch the flow passage of a gas-liquid multiphase flow from the second path to the first path, and causes the second opening/closing means 132 to close the path from the gas outlet section 22 to the confluence section 114. For example, the controller section 300 may perform the second process that causes the third opening/ closing means 133 to open the path from the branch section 113 to the confluence section 114, and then causes the fourth opening/closing means 134 to close the path from the branch section 113 to the inlet section 20 of the gas-liquid separator 100. This makes it possible to prevent a situation in which the flow of a gas-liquid multiphase flow is blocked, so that the flow rate can be safely measured.

The controller section 300 may perform the first step (step S100) when a predetermined time td1 has elapsed after the measurement results started to be recorded, for example. The controller section 300 may perform the second step (step S102) when a predetermined pressure is measured by the pressure measurement section 200, for example. In the example illustrated in FIG. 13, the controller section 300 may perform the second step (step S102) when a difference in pressure equal to or greater than a predetermined value dP1 has been measured by the differential pressure transmitter 220. The predetermined value dP1 may be a difference in pressure that corresponds to a state in which the liquid surface is positioned between the connecting pipe 202 and the connecting pipe 203, for example.

In the third step (step S104), the controller section 300 performs a third process that causes the pressure measurement section 200 to measure the pressure at two or more measurement points that differ in height in at least one of the gas-liquid separator 100 and the liquid outlet pipe 121. In the example illustrated in FIG. 13, the pressure measurement section 200 measures the pressure at three measurement points at which the connecting pipes 201, 202, and 203 are respectively provided. The liquid flow rate can be calculated based on the pressure measured by the pressure measurement section 200. The liquid flow rate calculation section 400 may calculate the liquid flow rate. A liquid flow rate calculation example is described later.

The controller section 300 may perform the third step (step S104) when a predetermined time td2 has elapsed after completion of the second step (step S102), for example. The predetermined time td2 may be a time required for the liquid surface to become stable within the required measurement accuracy range, for example. The predetermined time td2 may be experimentally determined depending on the specification of the batch-type multiphase flow rate measurement device 1.

Note that the controller section 300 may also perform the third process in a period other than the third step (step S104). For example, the controller section 300 may successively perform the third process in a period from a time before the first step (step S100) is started to a time after completion of the fifth step (step S108).

In the fourth step (step S106), the controller section 300 performs a fourth process that causes the first opening/ closing means 131 to open the path from the liquid outlet section 21 to the confluence section 114. The controller section 300 may perform the fourth step (step S106) after completion of the third step (step S104), for example.

In the fifth step (step S108), the controller section 300 performs a fifth process that causes the first opening/ closing means 131 to close the path from the liquid outlet section 21 to the confluence section 114. In the example illustrated in FIG. 13, the controller section 300 may perform the fifth step (step S108) when a difference in pressure equal to or less than a predetermined value dP2 has been measured by the differential pressure transmitter 210. The predetermined value dP2 may be a difference in pressure that corresponds to a state in which the liquid surface is lower than the connecting pipe 201, for example.

2-3. Liquid flow rate calculation example when using batch-type multiphase flow rate measurement method using batch-type multiphase flow rate measurement device according to first embodiment

A liquid flow rate calculation example when using the batch-type multiphase flow rate measurement method using the batch-type multiphase flow rate measurement device 1 according to the first embodiment is described below taking a gas-liquid multiphase flow that consists of oil, water, and gas as an example. The following description is given on the assumption that oil and water are separated (i.e., an emulsion is not formed).

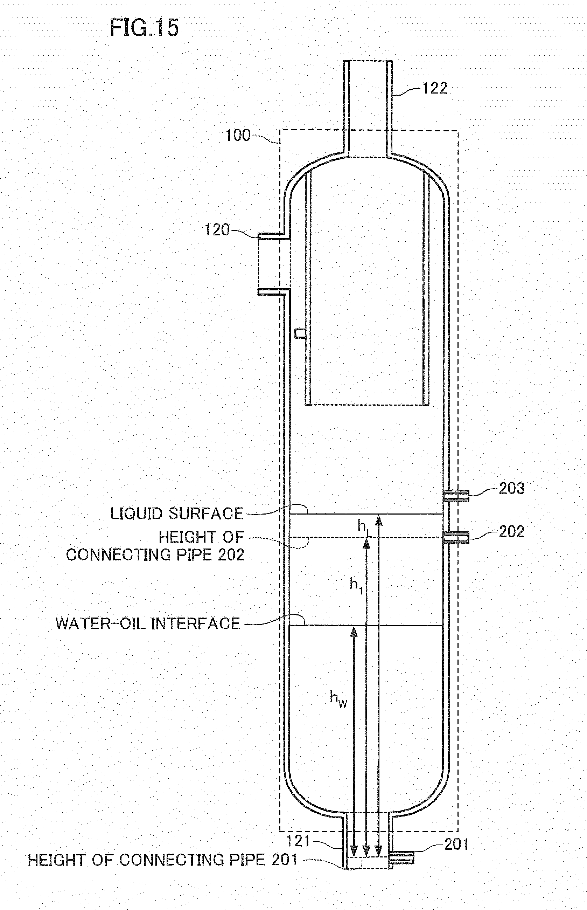

FIG. 15 is a schematic view illustrating a liquid flow rate calculation example. FIG. 15 schematically illustrates the meridian cross section of the main part of the batch-type multiphase flow rate measurement device 1. FIG. 15 illustrates a state in which the liquid surface is positioned between the connecting pipe 202 and the connecting pipe 203, and the water-oil interface is positioned between the connecting pipe 201 and the connecting pipe 202 in the third step (step S104).

The height of the water-oil interface from the height of the connecting pipe 201 is referred to as $h_W$, the height of the connecting pipe 202 from the height of the connecting pipe 201 is referred to as $h_1$, and the height of the liquid surface from the height of the connecting pipe 201 is referred to as $h_L$. The oil density calculated under the pressure P at the temperature T measured by the gas flowmeter 500 is referred to as $\rho_O$, the water density calculated under the pressure P at the temperature T measured by the gas flowmeter 500 is referred to as $\rho_W$, the gravitational acceleration is referred to as g, the pressure difference output by the differential pressure transmitter 210 is referred to as $dP_{W-1}$, the pressure difference output by the differential pressure transmitter 220 is referred to as $dP_L$, and the elapsed time from the start of the first step (step S100) to completion of the second step (step S102) is referred to as $dt_L$.

When the oil density $\rho_O$ is lower than the water density $\rho_W$, the height $h_L$ of the liquid surface from the height of the connecting pipe 201 is calculated by the following expression (1).

$$h_L = h_1 + \frac{dP_L}{\rho_O g} \quad (1)$$

The height $h_W$ of the water-oil interface from the height of the connecting pipe 201 is calculated by the following expression (2).

$$h_W = \frac{dP_{W-1} - \rho_O g h_1}{(\rho_W - \rho_O)g} \quad (2)$$

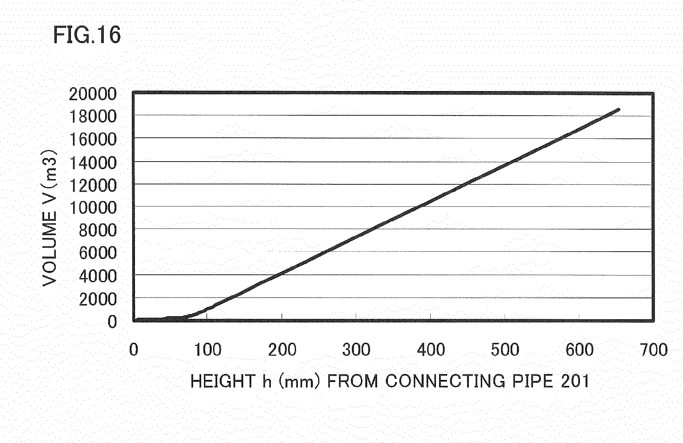

When the vertical height from the connecting pipe 201 is referred to as h, the volume V of the liquid outlet pipe 121 and the gas-liquid separator 100 from the upper part of the first opening/closing means 131 to the vertical height h is expressed by a function of the vertical height h corresponding to the shape of the liquid outlet pipe 121 and the gas-liquid separator 100. Specifically, the volume V is expressed by $V=f_V(h)$. FIG. 16 is a graph illustrating an example of the relationship between the volume V and the height h. The liquid flow rate (liquid volume flow rate) $Q_L$ is calculated by the following expression (3) using the above function, and the water cut WC is calculated by the following expression (4) using the above function.

$$Q_L = \frac{f_V(h_L)}{dt_L} \quad (3)$$

$$WC = \frac{f_V(h_W)}{f_V(h_L)} \quad (4)$$

2-4. Gas flow rate calculation example when using batch-type multiphase flow rate measurement method using batch-type multiphase flow rate measurement device according to first embodiment

A gas flow rate calculation example when using the batch-type multiphase flow rate measurement method using the batch-type multiphase flow rate measurement device 1 according to the first embodiment is described below taking a gas-liquid multiphase flow that consists of oil, water, and gas as an example.

When the start time of the first step (step S100) is referred to as t1, the start time of the second step (step S102) is referred to as t2, and the time required for the gas flow rate to become stable after the time t1 is referred to as dt, the average gas volume flow rate is indicated by the average value of the gas volume flow rate $Q_G$ measured by the gas flowmeter 500 from the time t1+dt to the time t2. Specifically, the average gas volume flow rate is given by the following expression (5).

Average gas volume flow rate $\overline{Q_G} =$ average value of gas volume flow rate $Q_G$

$$(5)$$

Since gas present in the gas-liquid separator 100 is discharged to the gas outlet pipe 122 as liquid separated by the gas-liquid separator 100 is accumulated in the gas-liquid separator 100, a more accurate average gas volume flow rate is given by the following expression (6).

More accurate average gas volume flow rate = $\overline{Q_{GT}} = \overline{Q_G} - Q_L$ $\qquad (6)$

Note that the gas volume flow rate can be converted into the gas volume flow rate in a normal state by using the average temperature and the average pressure from the time t1+dt to the time t2.

2-5. Batch-type multiphase flow rate measurement device according to second embodiment

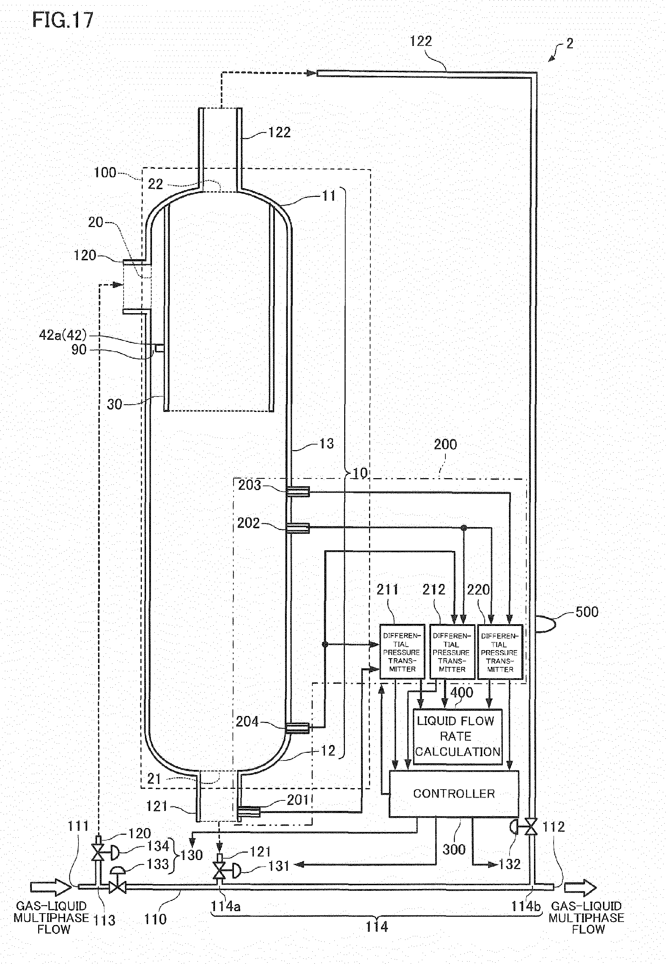

FIG. 17 is an exemplary schematic view illustrating the meridian cross section of a batch-type multiphase flow rate measurement device 2 according to a second embodiment. Note that the elements identical to those of the batch-type multiphase flow rate measurement device 1 according to the first embodiment are indicated by identical symbols (reference numerals), and detailed description thereof is omitted.

The batch-type multiphase flow rate measurement device 2 includes a connecting pipe 204 that is provided in the body section 13 of the gas-liquid separator 100, and used as a pressure measurement point. In the example illustrated in FIG. 17, the connecting pipe 201 is provided at a position lower than the connecting pipe 204, the connecting pipe 204 is provided at a position lower than the connecting pipe 202, and the connecting pipe 202 is provided at a position lower than the connecting pipe 203. The horizontal cross-sectional area in the gas-liquid separator 100 is identical in an area between the connecting pipe 204 and the connecting pipe 203. It is preferable that the connecting pipe 204 be disposed at a position close to the lowest part of the range in which the horizontal cross-sectional area in the gas-liquid separator 100 is identical within the allowable design range.

The pressure measurement section 200 of the batch-type multiphase flow rate measurement device 2 includes a differential pressure transmitter 211 that outputs a signal based on the difference between the pressure inside the connecting pipe 201 and the pressure inside the connecting pipe 204, and a differential pressure transmitter 212 that outputs a signal based on the difference between the pressure inside the connecting pipe 204 and the pressure inside the connecting pipe 202, instead of the differential pressure transmitter 210.

The batch-type multiphase flow rate measurement device 2 can measure the flow rate of liquid included in a gas-liquid multiphase flow in the same manner as described in the section entitled "2-2. Batch-type multiphase flow rate measurement method using batch-type multiphase flow rate measurement device according to first embodiment".

2-6. Liquid flow rate calculation example when using batch-type multiphase flow rate measurement method using batch-type multiphase flow rate measurement device according to second embodiment

A liquid flow rate calculation example when using the batch-type multiphase flow rate measurement method using the batch-type multiphase flow rate measurement device 2 according to the second embodiment is described below taking a gas-liquid multiphase flow that consists of oil, water, and gas as an example. The following description is given on the assumption that oil and water are not separated (i.e., an emulsion is present) in the lower area.

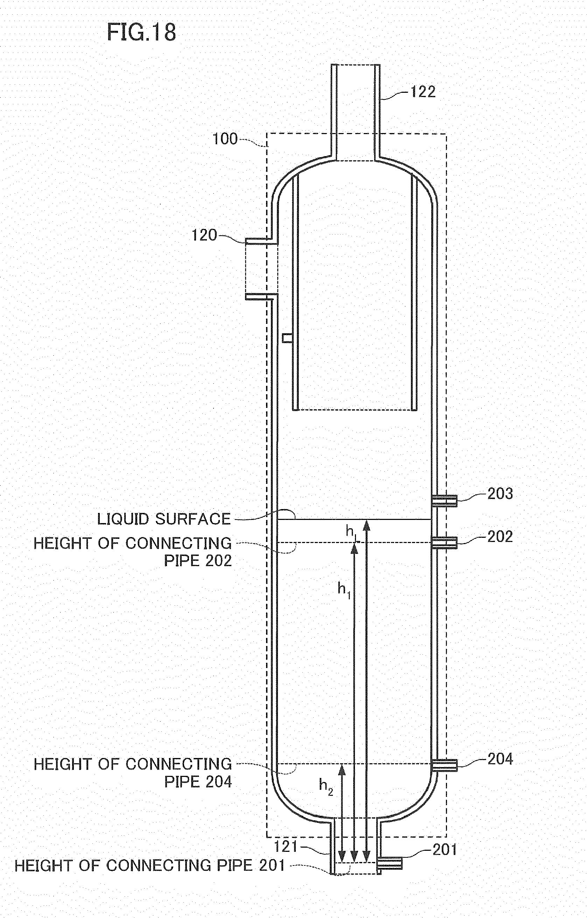

FIG. 18 is a schematic view illustrating a liquid flow rate calculation example. FIG. 18 schematically illustrates the meridian cross section of the main part of the batch-type multiphase flow rate measurement device 2. FIG. 18 illustrates a state in which the liquid surface is positioned between the connecting pipe 202 and the connecting pipe 203 in the third step (step S104).

The height of the connecting pipe 202 from the height of the connecting pipe 201 is referred to as $h_1$, the height of the connecting pipe 204 from the height of the connecting pipe 201 is referred to as $h_2$, and the height of the liquid surface from the height of the connecting pipe 201 is referred to as $h_L$. The oil density calculated under the pressure P at the temperature T measured by the gas flowmeter 500 is referred to as $\rho_O$, the water density calculated under the pressure P at the temperature T measured by the gas flowmeter 500 is referred to as $\rho_W$, the gravitational acceleration is referred to as g, the pressure difference output by the differential pressure transmitter 211 is referred to as $dP_{W-2}$, and the pressure difference output by the differential pressure transmitter 212 is referred to as $dP_{W-3}$.

When the oil density $\rho_O$ is lower than the water density $\rho_W$, and it is considered that only oil is present at a position higher than the height of the connecting pipe 202, the height $h_L$ of the liquid surface from the height of the connecting pipe 201 is calculated by the above expression (1).

When the vertical height from the connecting pipe 201 is referred to as h, the volume V of the liquid outlet pipe 121 and the gas-liquid separator 100 from the upper part of the first opening/closing means 131 to the vertical height h is expressed as a function of the vertical height h corresponding to the shape of the liquid outlet pipe 121 and the gas-liquid separator 100. Specifically, the volume V is expressed by $V=f_V(h)$. Specifically, the volume $V_W$ of water is given by the following expression (7) using the above function.

$$\mathrm{V_W} = f_V(h_2)\frac{dP_{W-2} - g\rho_O h_2}{(\rho_W - \rho_O)gh_2} + (f_V(h_1) - f_V(h_2))\frac{dP_{W-3} - g\rho_O(h1 - h_2)}{(\rho_W - \rho_O)g(h1 - h_2)} \quad (7)$$

The water cut WC is given by the following expression (8) using the volume $V_W$ of water.

$$WC = \frac{V_W}{f_V(h_L)} \quad (8)$$

2-7. Batch-type multiphase flow rate measurement device according to third embodiment

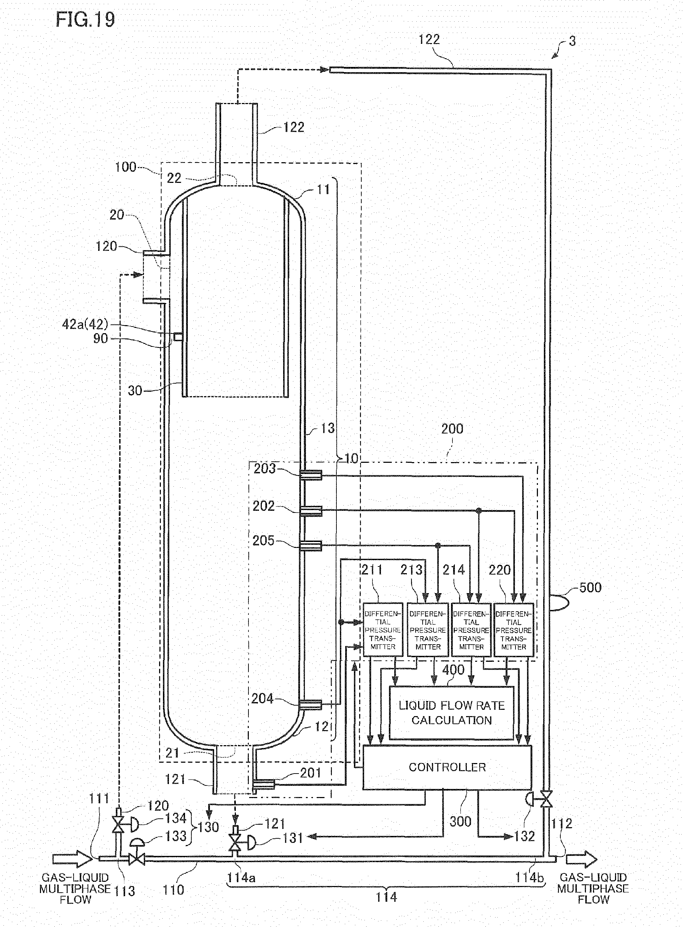

FIG. 19 is an exemplary schematic view illustrating the meridian cross section of a batch-type multiphase flow rate measurement device 3 according to a third embodiment. Note that the elements identical to those of the batch-type multiphase flow rate measurement device 2 according to the second embodiment are indicated by identical symbols (reference numerals), and detailed description thereof is omitted.

The batch-type multiphase flow rate measurement device 3 includes a connecting pipe 205 that is provided in the body section 13 of the gas-liquid separator 100, and used as a pressure measurement point. In the example illustrated in FIG. 19, the connecting pipe 201 is provided at a position lower than the connecting pipe 204, the connecting pipe 204 is provided at a position lower than the connecting pipe 205, the connecting pipe 205 is provided at a position lower than the connecting pipe 202, and the connecting pipe 202 is provided at a position lower than the connecting pipe 203.

The pressure measurement section 200 of the batch-type multiphase flow rate measurement device 3 includes a differential pressure transmitter 213 that outputs a signal based on the difference between the pressure inside the connecting pipe 204 and the pressure inside the connecting pipe 205, and a differential pressure transmitter 214 that outputs a signal based on the difference between the pressure inside the connecting pipe 205 and the pressure inside the connecting pipe 202, instead of the differential pressure transmitter 212.

The batch-type multiphase flow rate measurement device 3 can measure the flow rate of liquid included in a gas-liquid multiphase flow in the same manner as described in the section entitled "2-2. Batch-type multiphase flow rate measurement method using batch-type multiphase flow rate measurement device according to first embodiment".

2-8. Oil density/water density calculation example when using batch-type multiphase flow rate measurement device according to third embodiment

An oil density/water density calculation example when using the batch-type multiphase flow rate measurement device 3 according to the third embodiment is described below taking a gas-liquid multiphase flow that consists of oil, water, and gas as an example. The following description is given on the assumption that oil and water are separated (i.e., an emulsion is not formed).

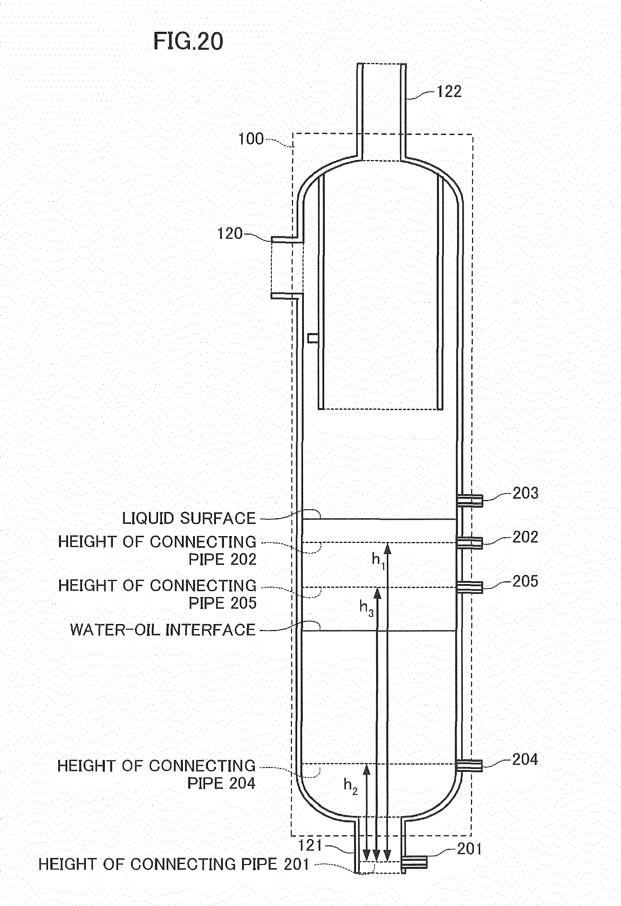

FIG. 20 is a schematic view illustrating an oil density/water density calculation example. FIG. 20 schematically illustrates the meridian cross section of the main part of the batch-type multiphase flow rate measurement device 3. FIG. 20 illustrates a state in which the liquid surface is positioned between the connecting pipe 202 and the connecting pipe 203, and the water-oil interface is positioned between the connecting pipe 204 and the connecting pipe 205 in the third step (step S104).

The height of the connecting pipe 202 from the height of the connecting pipe 201 is referred to as $h_1$, the height of the connecting pipe 204 from the height of the connecting pipe 201 is referred to as $h_2$, and the height of the connecting pipe 205 from the height of the connecting pipe 201 is referred to as $h_3$. The gravitational acceleration is referred to as g, the pressure difference output by the differential pressure transmitter 211 is referred to as $dP_W$, and the pressure difference output by the differential pressure transmitter 214 is referred to as $dP_O$.

In this case, the oil density $\rho_O$ under pressure is calculated by the following expression (9), and the water density $\rho_W$ is calculated by the following expression (10).

$$\rho_O = \frac{dP_O}{g(h_1 - h_3)} \quad (9)$$

$$\rho_W = \frac{dP_W}{gh_2} \quad (10)$$

When the liquid surface is oil forming, the liquid surface may not between the connecting pipe 202 and the connecting pipe 203 but below the connecting pipe 202 after the completion of the second step (S102). In such case, when the liquid surface is between the connecting pipe 205 and the connecting pipe 202, the batch-type multiphase flow rate measurement device 3 according to the third embodiment can calculate the liquid flow rate and WC by the same method of the batch-type multiphase flow rate measurement device 1 according to the first embodiment.

2-9. Batch-type multiphase flow rate measurement device according to fourth embodiment

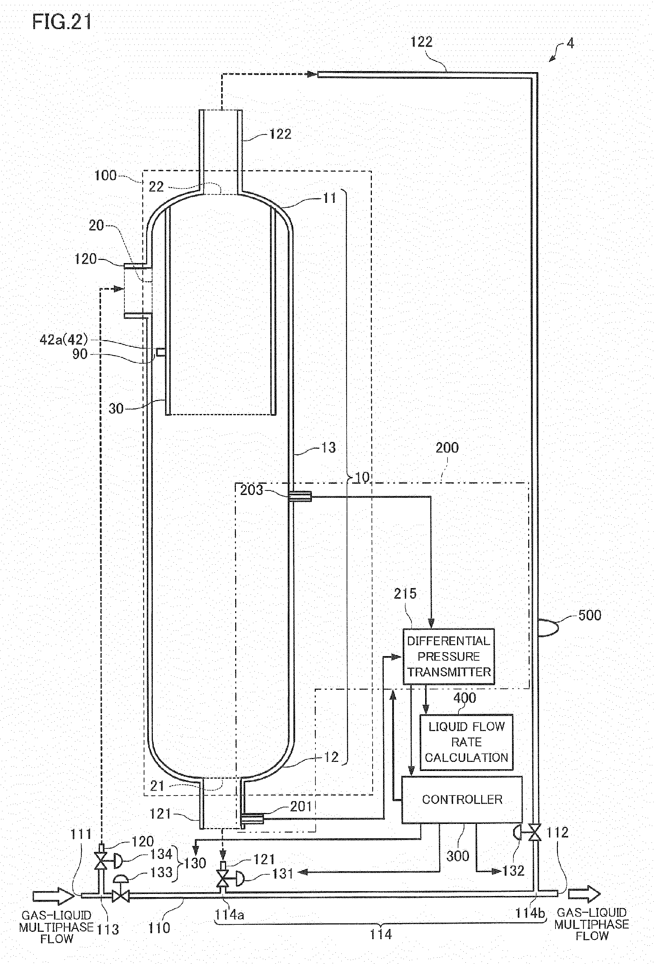

FIG. 21 is an exemplary schematic view illustrating the meridian cross section of a batch-type multiphase flow rate measurement device 4 according to a fourth embodiment. Note that the elements identical to those of the batch-type multiphase flow rate measurement device 1 according to the first embodiment are indicated by identical symbols (reference numerals), and detailed description thereof is omitted.

The batch-type multiphase flow rate measurement device 4 is configured in that same manner as the batch-type multiphase flow rate measurement device 1, except that the connecting pipe 202 and the differential pressure transmitter 220 are omitted. In the example illustrated in FIG. 21, the connecting pipe 201 is provided at a position lower than the connecting pipe 203.

The pressure measurement section 200 of the batch-type multiphase flow rate measurement device 4 includes a differential pressure transmitter 215 that outputs a signal based on the difference between the pressure inside the connecting pipe 201 and the pressure inside the connecting pipe 203, instead of the differential pressure transmitter 210.

The batch-type multiphase flow rate measurement device 4 can measure the flow rate of liquid included in a gas-liquid multiphase flow in the same manner as described in the section entitled "2-2. Batch-type multiphase flow rate measurement method using batch-type multiphase flow rate measurement device according to first embodiment".

2-10. Liquid flow rate calculation example when using batch-type multiphase flow rate measurement method using batch-type multiphase flow rate measurement device according to fourth embodiment

A liquid flow rate calculation example when using the batch-type multiphase flow rate measurement method using the batch-type multiphase flow rate measurement device 4 according to the fourth embodiment is described below taking a gas-liquid multiphase flow that consists of a single-phase liquid (i.e., liquid having a uniform liquid density) and gas as an example.

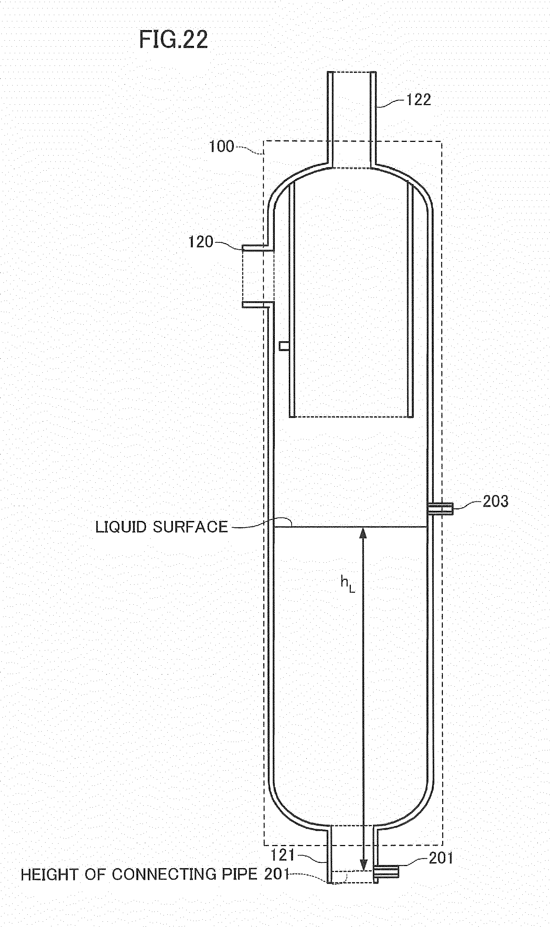

FIG. 22 is a schematic view illustrating a liquid flow rate calculation example. FIG. 22 schematically illustrates the meridian cross section of the main part of the batch-type multiphase flow rate measurement device 4. FIG. 22 illustrates a state in which the liquid surface is positioned between the connecting pipe 201 and the connecting pipe 203 in the third step (step S104).

The height of the liquid surface from the height of the connecting pipe 201 is referred to as $h_L$. The liquid density calculated under the pressure P at the temperature T measured by the gas flowmeter 500 is referred to as $\rho_L$, the gravitational acceleration is referred to as g, the pressure difference output by the differential pressure transmitter 215 is referred to as $dP_L$, and the elapsed time from the start of the first step (step S100) to completion of the second step (step S102) is referred to as $dt_L$.

In this case, the height $h_L$ of the liquid surface is calculated by the following expression (11), and the liquid flow rate $Q_L$ is calculated by the following expression (12).

$$h_L = \frac{dP_L}{\rho_L g} \quad (11)$$

$$Q_L = \frac{f_V(h_L)}{dt_L} \quad (12)$$

2-11. Batch-type multiphase flow rate measurement device according to fifth embodiment

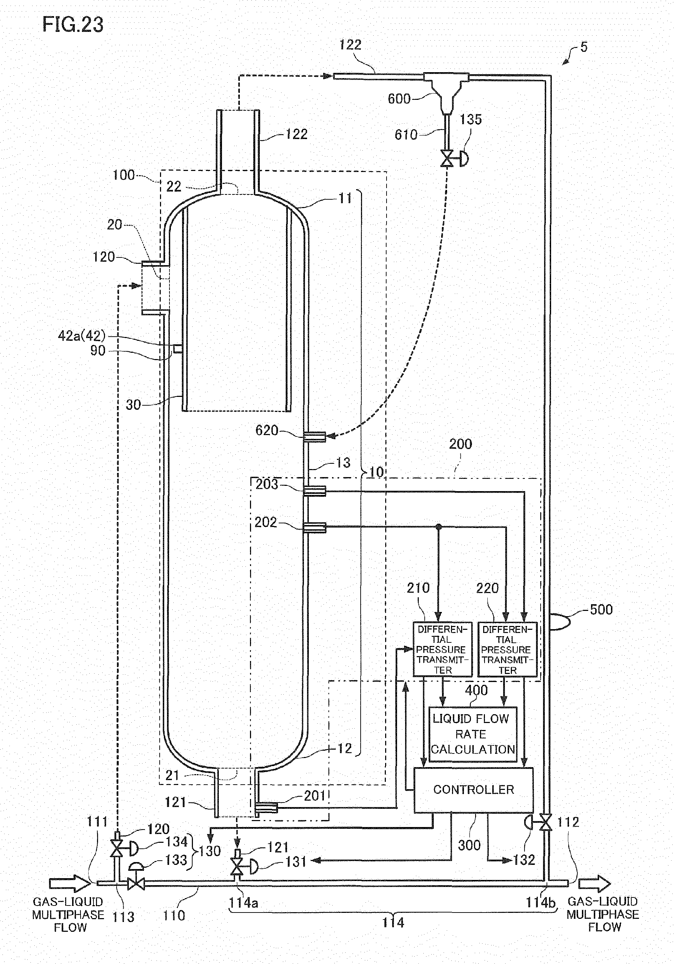

FIG. 23 is an exemplary schematic view illustrating the meridian cross section of a batch-type multiphase flow rate measurement device 5 according to a fifth embodiment. Note that the elements identical to those of the batch-type multiphase flow rate measurement device 1 according to the first embodiment are indicated by identical symbols (reference numerals), and detailed description thereof is omitted.

The batch-type multiphase flow rate measurement device 5 includes a droplet separator 600 that is provided in the gas outlet pipe 122, and separates droplets from gas that is discharged from the gas outlet section 22 of the gas-liquid separator 100.

The droplet separator 600 that separates droplets from gas may be a T-shaped pipe, a Y-shaped pipe, an inverted triangular pipe, or a funnel pipe that communicates with the lower side of the gas outlet pipe 122 via an opening having a cross-sectional area larger than that of the gas outlet pipe 122 so that the fluid velocity (flow rate) is reduced. It is preferable that the gas outlet pipe 122 disposed on the upstream side of the droplet separator 600 have a sufficient horizontal dimension so that separation of droplets from gas is promoted. It is preferable that the gas outlet pipe 122 disposed on the upstream side of the droplet separator 600 be a horizontal pipe or a downwardly inclined pipe. In the example illustrated in FIG. 23, the droplet separator 600 is a funnel pipe that communicates with the lower side of the gas outlet pipe 122 via an opening having a cross-sectional area larger than that of the gas outlet pipe 122. The droplet separator 600 guides liquid mist and a liquid phase that are mixed in gas that passes through the gas outlet pipe 122 to a pipe 610 positioned below the gas outlet pipe 122, so that a situation in which liquid flows into the gas outlet pipe 122 that is positioned on the downstream side of the droplet separator 600 can be prevented. This makes it possible to more accurately measure the gas flow rate.

Moreover, the amount (state) of droplets introduced into the gas outlet pipe 122 can be easily determined by providing the droplet separator 600. This makes it possible to determine the liquid in gas per total liquid and the measurement accuracy. For example, the measurement accuracy of the liquid flow rate and the gas flow rate is determined to be low when the liquid in gas per total liquid is high, and is determined to be high when the liquid in gas per total liquid is low.

The pipe 610 may communicate with the inner space of the gas-liquid separator 100 via a connecting pipe 620. The liquid flow rate can be more accurately measured by returning liquid separated by the droplet separator 600 to the gas-liquid separator 100.

The batch-type multiphase flow rate measurement device 5 may include a fifth opening/closing means 135 that is provided in the pipe 610, and opens or closes the path from the droplet separator 600 to the connecting pipe 620. A known valve may be used as the fifth opening/closing means 135. In the flowchart illustrated in FIG. 14, the fifth opening/ closing means 135 is closed in the steps S 100, S 102, and S 104, and is opened after completion of the step S 104. After returning liquid separated by the droplet separator 600 to the gas-liquid separator 100, the step S 104 is performed. The step S 106 is then performed after (or at the same time as) closing the fifth opening/closing means 135. This makes it possible to return liquid separated by the droplet separator 600 to the gas-liquid separator 100, and determine the liquid in gas per total liquid. It is preferable that the connecting pipe 620 be disposed at a position equal to or higher than the connecting pipe 203. It is preferable that the pipe 610 does not extend through an area lower than the connecting pipe 620. This makes it possible to smoothly discharge liquid accumulated in the droplet separator 600 to the gas-liquid separator 100.

2-12. Batch-type multiphase flow rate measurement device according to sixth embodiment

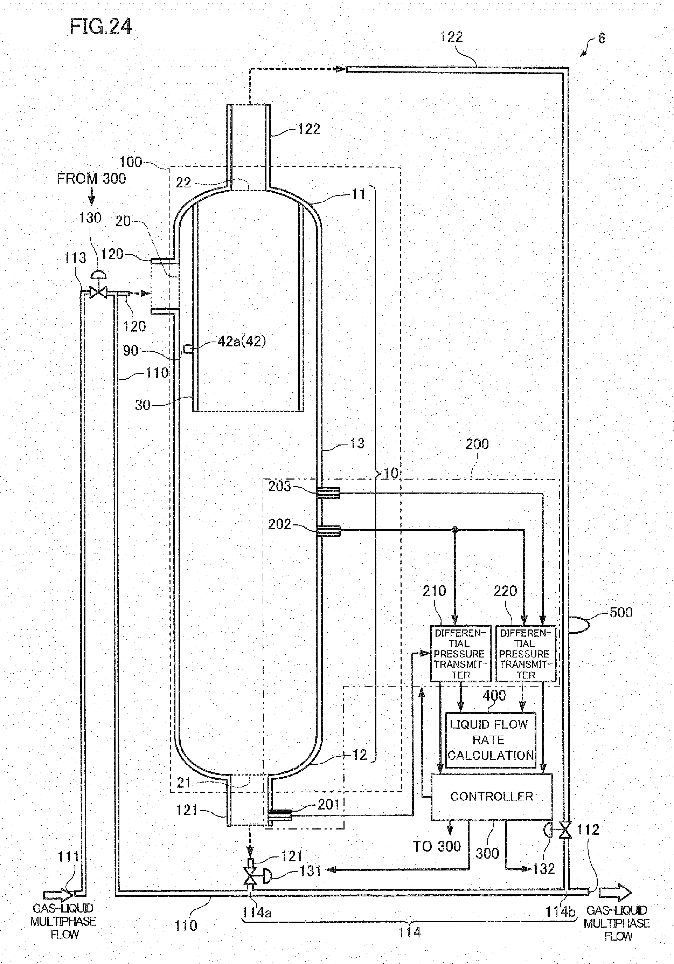

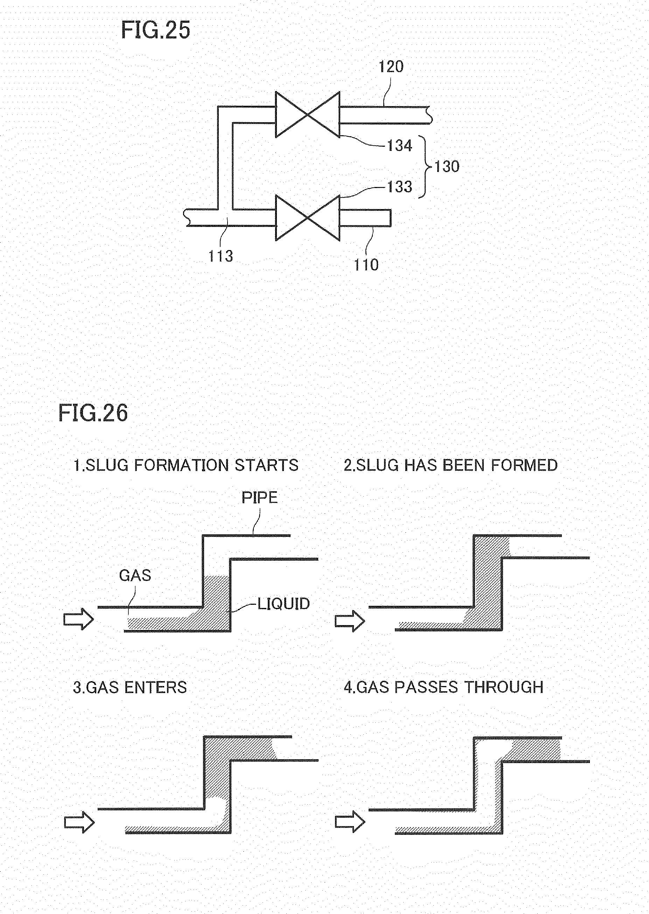

FIG. 24 is an exemplary schematic view illustrating the meridian cross section of a batch-type multiphase flow rate measurement device 6 according to a sixth embodiment, and FIG. 25 is an exemplary schematic view illustrating an area of the batch-type multiphase flow rate measurement device 6 according to the sixth embodiment around the flow passage switch means 130. Note that the elements identical to those of the batch-type multiphase flow rate measurement device 1 according to the first embodiment are indicated by identical symbols (reference numerals), and detailed description thereof is omitted. The flow passage switch means 130 of the batch-type multiphase flow rate measurement device 6 according to the sixth embodiment is provided at a position that differs in height from the inlet section 20 of the gas-liquid separator 100 to only a small extent.

FIG. 26 is a schematic view illustrating a slug flow. FIG. 26 illustrates the vertical section of a pipe. Liquid in the pipe is indicated by diagonal lines, and gas is indicated in white. In the example illustrated in FIG. 26, a gas-liquid multiphase flow supplied in the direction indicated by a white arrow flows through a horizontal pipe, a vertical pipe, and a horizontal pipe in this order. As illustrated in FIG. 26, formation of slug (i.e., the vertical pipe is filled with liquid) starts as indicated by (1), and is completed as indicated by (2). As illustrated in FIG. 26, gas enters the vertical pipe as indicated by (3), and passes through the vertical pipe as indicated by (4).

When the slug illustrated in FIG. 26 has occurred, the liquid flow rate measurement accuracy decreases. Since the batch-type multiphase flow rate measurement device 6 according to the sixth embodiment is configured so that the flow passage switch means 130 is provided at a position that differs in height from the inlet section 20 of the gas-liquid separator 100 to only a small extent, occurrence of a slug flow can be suppressed. This makes it possible to implement a batch-type multiphase flow rate measurement device that achieves high measurement accuracy.

Note that the above embodiments and the modifications thereof are merely examples, and the invention is not limited to the above embodiments and the modifications thereof. For example, a plurality of embodiments and/or a plurality of modifications may be appropriately combined.

The invention is not limited to the above embodiments. Various modifications and variations may be made without departing from the scope of the invention. For example, the invention includes various other configurations that are substantially the same as the configurations described in connection with the above embodiments (e.g., a configuration having the same function, method, and results, or a configuration having the same objective and results). The invention also includes a configuration in which an unsubstantial section (element) described in connection with the above embodiments is replaced with another section (element). The invention also includes a configuration having the same effects as those of the configurations described in connection with the above embodiments, or a configuration capable of achieving the same objective as that of the configurations described in connection with the above embodiments. The invention also includes a configuration in which a known technique is added to the configurations described in connection with the above embodiments.

REFERENCE SIGNS LIST

1, 2, 3, 4, 5, 6: batch-type multiphase flow rate measurement device, 10: container, 11: top section, 12: bottom section, 13, 13a: body section, 20: inlet section, 21: liquid outlet section, 22: gas outlet section, 30: inner pipe, 40: guide plate, 41: guide plate side section, 41a, 41b: first guide plate, 42: guide plate lower section, 42a: second guide plate, 70, 70a: side-area leakage prevention plate, 72: lower-area leakage prevention plate, 90: space, 100, 100a, 100b, 100c, 100d: gas-liquid separator, 110: main pipe, 111: gas-liquid multiphase flow inlet section, 112: gas-liquid multiphase flow outlet section, 113: branch section, 114: confluence section, 114a: first confluence section, 114b: second confluence section, 120: inlet pipe, 121: liquid outlet pipe, 122: gas outlet pipe, 130: flow passage switch means, 131: first opening/closing means, 132: second opening/closing means, 133: third opening/closing means, 134: fourth opening/closing means, 135: fifth opening/closing means, 200: pressure measurement section, 201, 202, 203, 204, 205: connecting pipe, 210, 211, 212, 213, 214, 215, 220: differential pressure transmitter, 300: controller section, 400: liquid flow rate calculation section, 500: gas flowmeter, 600: droplet separator, 610: pipe, 620: connecting pipe

**Claims**

1. A batch-type multiphase flow rate measurement device comprising:

    a gas-liquid separator that includes a container having a top section, a bottom section, and a hollow body section that connects the top section and the bottom section, an inlet section that supplies a gas-liquid multiphase flow to the container via a side surface of the body section, a liquid outlet section that discharges liquid via the bottom section, a gas outlet section that discharges gas via the top section, an inner pipe that is hollow, an upper end of the inner pipe being connected to the top section, and a lower end of the inner pipe being open at a position lower than a lower end of the inlet section, and a guide plate that is provided on at least one of an outer side surface of the inner pipe and an inner side surface of the body section;
    a main pipe that includes a gas-liquid multiphase flow inlet section to which the gas-liquid multiphase flow is supplied, a gas-liquid multiphase flow outlet section from which a gas-liquid multiphase flow is discharged, a branch section, and a confluence section, the branch section and the confluence section being provided between the gas-liquid multiphase flow inlet section and the gas-liquid multiphase flow outlet section;
    an inlet pipe that connects the branch section and the inlet section, and extends toward a center axis of the body section via the inlet section when viewed from above;
    a liquid outlet pipe that connects the confluence section and the liquid outlet section;
    a gas outlet pipe that connects the confluence section and the gas outlet section;
    flow passage switch means that switches a flow passage of the gas-liquid multiphase flow between a first path that dose not pass through the gas-liquid separator and a second path that passes through the gas-liquid separator;
    first opening/closing means that is provided in the liquid outlet pipe, and opens or closes a path from the liquid outlet section to the confluence section;
    second opening/closing means that is provided in the gas outlet pipe, and opens or closes a path from the gas outlet section to the confluence section;
    a pressure measurement section that measures pressure at two or more measurement points that differ in height in at least one of the gas-liquid separator and the liquid outlet pipe; and
    a gas flowmeter that is provided in the gas outlet pipe, and measures a flow rate, temperature, and pressure of gas discharged via the gas outlet section,
    the inner side surface of the body section and the outer side surface of the inner pipe being concentric when viewed from above,
    the guide plate including a guide plate side section that extends in a non-horizontal direction, and a guide plate lower section that extends in a non-vertical direction and is continuous with the guide plate side section,
    the guide plate side section being at least disposed on the inner side surface of the body section at a position on one side of the inlet section, or on the outer side surface of the inner pipe at a position on one side of an area opposite to the inlet section,
    the guide plate lower section being at least disposed on the outer side surface of the inner pipe at a position directly under an area opposite to the inlet section along part of the outer side surface of the inner pipe when viewed from above, and
    a space being formed in at least part of an area between the guide plate lower section and the body section.

2. The batch-type multiphase flow rate measurement device according to claim 1, further comprising:

    a controller section that controls the flow passage switch means, the first opening/closing means, the second opening/closing means, and the pressure measurement section,
    the controller section performing:

a first process that causes the flow passage switch means to switch the flow passage of the gas-liquid multiphase flow from the first path to the second path, and causes the second opening/closing means to open the path from the gas outlet section to the confluence section;

a second process that causes the flow passage switch means to switch the flow passage of the gas-liquid multiphase flow from the second path to the first path, and causes the second opening/closing means to close the path from the gas outlet section to the confluence section;

a third process that causes the pressure measurement section to measure pressure at two or more measurement points that differ in height in at least one of the gas-liquid separator and the liquid outlet pipe;

a fourth process that causes the first opening/closing means to open the path from the liquid outlet section to the confluence section; and

a fifth process that causes the first opening/closing means to close the path from the liquid outlet section to the confluence section.

3. The batch-type multiphase flow rate measurement device according to claim 1 or 2, wherein the flow passage switch means includes:

third opening/closing means that is provided in the main pipe, and opens or closes a path from the branch section to the confluence section; and

fourth opening/closing means that is provided in the inlet pipe, and opens or closes a path from the branch section to the inlet section.

4. The batch-type multiphase flow rate measurement device according to claim 3 when dependent on claim 2, wherein the controller section performs the first process that causes the fourth opening/closing means to open the path from the branch section to the inlet section, causes the second opening/closing means to open the path from the gas outlet section to the confluence section, and then causes the third opening/closing means to close the path from the branch section to the confluence section.

5. The batch-type multiphase flow rate measurement device according to claim 3 when dependent on claim 2, or claim 4, wherein the controller section performs the second process that causes the third opening/closing means to open the path from the branch section to the confluence section, and then causes the fourth opening/closing means to close the path from the branch section to the inlet section.

6. The batch-type multiphase flow rate measurement device according to any one of claims 1 to 5, further comprising:

a liquid flow rate calculation section that calculates a liquid flow rate, the liquid flow rate calculation section calculating the liquid flow rate based on pressures measured by the pressure measurement section at two or more measurement points that differ in height, and an elapsed time when the flow passage of the gas-liquid multiphase flow is the second path by the flow passage switch means.

7. The batch-type multiphase flow rate measurement device according to any one of claims 1 to 6, wherein the first opening/closing means is provided at a position higher than the height of the confluence section.

8. The batch-type multiphase flow rate measurement device according to any one of claims 1 to 7, further comprising:

a droplet separator that is provided in the gas outlet pipe, and separates droplets from gas that is discharged from the gas outlet section.

9. A batch-type multiphase flow rate measurement method using the batch-type multiphase flow rate measurement device according to any one of claims 1 to 8, the method comprising:

a first step that includes switching the flow passage of the gas-liquid multiphase flow from the first path to the second path by using the flow passage switch means, and opening the path from the gas outlet section to the confluence section by using the second opening/closing means;

a second step that includes switching the flow passage of the gas-liquid multiphase flow from the second path to the first path by using the flow passage switch means, and closing the path from the gas outlet section to the confluence section by using the second opening/closing means;

a third step that includes measuring pressure at two or more measurement points that differ in height in at least one of the gas-liquid separator and the liquid outlet pipe by using the pressure measurement section;

a fourth step that includes opening the path from the liquid outlet section to the confluence section by using the first opening/closing means; and

a fifth step that includes closing the path from the liquid outlet section to the confluence section by using the first opening/closing means.

FIG.1

FIG.2

FIG.3

FIG.4

FIG.5

FIG.6

FIG.7

# FIG.8

FIG.9

FIG.10

## FIG.11

FIG.12

**LIQUID IN GAS PER TOTAL LIQUID**

| ✕ WATER FLOW RATE 1m³/h | ▲ WATER FLOW RATE 10m³/h |
|---|---|
| ☐ WATER FLOW RATE 5m³/h | ● WATER FLOW RATE 15m³/h |

NITROGEN GAS FLOW RATE

FIG.13

FIG.14

```
                    ┌─────────────┐
                    │    START    │
                    └─────────────┘
                           │
                           ▼                        ⌐S100
  ┌──────────────────────────────────────────────┐
  │ SWITCHES FLOW PASSAGE OF GAS-LIQUID           │
  │ MULTIPHASE FLUID FROM FIRST PATH TO           │
  │ SECOND PATH BY USING FLOW PASSAGE             │
  │ SWITCH MEANS 130, AND OPENS PATH              │
  │ FROM GAS OUTLET SECTION 22 TO                 │
  │ CONFLUENCE SECTION 114 BY USING               │
  │ SECOND OPENING/CLOSING MEANS 132              │
  └──────────────────────────────────────────────┘
                           │
                           ▼                        ⌐S102
  ┌──────────────────────────────────────────────┐
  │ SWITCHES FLOW PASSAGE OF GAS-LIQUID           │
  │ MULTIPHASE FLUID FROM SECOND PATH             │
  │ TO FIRST PATH BY USING FLOW PASSAGE           │
  │ SWITCH MEANS 130, AND CLOSES PATH             │
  │ FROM GAS OUTLET SECTION 22 TO                 │
  │ CONFLUENCE SECTION 114 BY USING               │
  │ SECOND OPENING/CLOSING MEANS 132              │
  └──────────────────────────────────────────────┘
                           │
                           ▼                        ⌐S104
  ┌──────────────────────────────────────────────┐
  │ MEASURES PRESSURE AT TWO OR MORE              │
  │ MEASUREMENT POINTS THAT DIFFER IN             │
  │ HEIGHT IN AT LEAST ONE OF GAS-LIQUID          │
  │ SEPARATOR 100 AND LIQUID OUTLET PIPE          │
  │ 121 BY USING PRESSURE MEASUREMENT             │
  │ SECTION 200                                   │
  └──────────────────────────────────────────────┘
                           │
                           ▼                        ⌐S106
  ┌──────────────────────────────────────────────┐
  │ OPENS PATH FROM LIQUID OUTLET SECTION         │
  │ 21 TO CONFLUENCE SECTION 114 BY USING         │
  │ FIRST OPENING/CLOSING MEANS 131               │
  └──────────────────────────────────────────────┘
                           │
                           ▼                        ⌐S108
  ┌──────────────────────────────────────────────┐
  │ CLOSES PATH FROM LIQUID OUTLET                │
  │ SECTION 21 TO CONFLUENCE SECTION 114          │
  │ BY USING FIRST OPENING/CLOSING MEANS          │
  │ 131                                           │
  └──────────────────────────────────────────────┘
                           │
                           ▼
                    ┌─────────────┐
                    │     END     │
                    └─────────────┘
```

FIG.15

LIQUID SURFACE

HEIGHT OF
CONNECTING PIPE 202

$h_L$

WATER-OIL INTERFACE

$h_1$

$h_W$

HEIGHT OF CONNECTING PIPE 201

100

120

122

203

202

201

121

FIG.16

HEIGHT h (mm) FROM CONNECTING PIPE 201

FIG.17

## FIG.18

FIG.19

GAS-LIQUID MULTIPHASE FLOW

GAS-LIQUID MULTIPHASE FLOW

DIFFERENTIAL PRESSURE TRANSMITTER

LIQUID FLOW RATE CALCULATION

CONTROLLER

# FIG.20

FIG.21

## FIG.22

LIQUID SURFACE

$h_L$

HEIGHT OF CONNECTING PIPE 201

FIG.23

# FIG.24

## FIG.25

## FIG.26

1.SLUG FORMATION STARTS

2.SLUG HAS BEEN FORMED

3.GAS ENTERS

4.GAS PASSES THROUGH

## INTERNATIONAL SEARCH REPORT

| | International application No. |
|---|---|
| | PCT/JP2011/068449 |

A. CLASSIFICATION OF SUBJECT MATTER
*G01F1/74*(2006.01)i

According to International Patent Classification (IPC) or to both national classification and IPC

B. FIELDS SEARCHED

Minimum documentation searched (classification system followed by classification symbols)
G01F1/74, B04C1/00-11/00, B01D19/00-19/04, B01D45/00-45/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-513234 A (Micro Motion Inc.), 08 April 2003 (08.04.2003), entire text; all drawings & US 6318156 B1 & EP 1224440 A2 & WO 2001/031298 A2 & CA 2389145 A & CN 1415070 A | 1-9 |
| A | JP 2008-107298 A (OVAL Corp.), 08 May 2008 (08.05.2008), entire text; all drawings & US 2009/0199653 A1 & EP 2077440 A1 & WO 2008/050522 A1 | 1-9 |

☒ Further documents are listed in the continuation of Box C.　　　☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 01 September, 2011 (01.09.11) | 13 September, 2011 (13.09.11) |

| Name and mailing address of the ISA/ <br> Japanese Patent Office | Authorized officer |
|---|---|
| Facsimile No. | Telephone No. |

Form PCT/ISA/210 (second sheet) (July 2009)

EP 2 546 617 A1

**INTERNATIONAL SEARCH REPORT**

International application No.

PCT/JP2011/068449

C (Continuation). DOCUMENTS CONSIDERED TO BE RELEVANT

| Category* | Citation of document, with indication, where appropriate, of the relevant passages | Relevant to claim No. |
|---|---|---|
| A | JP 55-501092 A (Maloney-Crawford Corp.), 11 December 1980 (11.12.1980), entire text; all drawings & US 4187088 A  & GB 2053033 A & WO 80/01466 A1 | 1-9 |
| A | JP 8-290028 A (Tsutomu KAMATA), 05 November 1996 (05.11.1996), entire text; all drawings (Family: none) | 1-9 |
| A | JP 2001-269524 A (Kamata Tecnas Co., Ltd.), 02 October 2001 (02.10.2001), entire text; all drawings & KR 10-2001-0093058 A | 1-9 |

Form PCT/ISA/210 (continuation of second sheet) (July 2009)

48

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001165741 A
- US 5526684 A
- US 4596586 A
- JP 2001246216 A
- JP 2000317212 A
- US 4187088 A

**Non-patent literature cited in the description**

- **JOHN S. LIEVOIS.** Multiphase Flow Measurement Class 8110. Colorado Experiment Engineering Station Inc,
- Development of Multiphase Flow Measuring System. **WATANABE T ; IKEDA T ; OKATSU H.** Annual Report 2007. Japan Oil, Gas and Metals National Corporation, 2007, 85-88
- Development of Multiphase Flow Measuring System. **WATANABE T ; IKEDA K ; ICHIKAWA M ; KAWAI M ; YAMADA M ; FUJIWARA K.** Proceedings of Lectures at 2009 Spring Meeting. Japanese Association for Petroleum Technology, 85-86